(19) Europäisches Patentamt
European Patent Office
Office européen des brevets

(11) EP 4 650 119 A1

(12) EUROPÄISCHE PATENTANMELDUNG

(43) Veröffentlichungstag:
19.11.2025 Patentblatt 2025/47

(21) Anmeldenummer: 24176599.9

(22) Anmeldetag: 17.05.2024

(51) Internationale Patentklassifikation (IPC):
**B25J 9/16** (2006.01)     G05B 19/4061 (2006.01)
**G05D 1/00** (2024.01)

(52) Gemeinsame Patentklassifikation (CPC):
**B25J 9/1676;** G05B 19/4061; G05B 2219/40202;
G05D 1/617

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: SICK AG
**79183 Waldkirch (DE)**

(72) Erfinder: Fischer, Tim
**79115 Freiburg (DE)**

(74) Vertreter: Manitz Finsterwald
**Patent- und Rechtsanwaltspartnerschaft mbB
Martin-Greif-Straße 1
80336 München (DE)**

Bemerkungen:
Geänderte Patentansprüche gemäss Regel 137(2)
EPÜ.

(54) **SICHERHEITSSYSTEMVERBUND ZUR ÜBERWACHUNG EINES BEREICHS UND EIN VERFAHREN ZUM BETRIEB DES SICHERHEITSSYSTEMVERBUNDS**

(57)     Ein Sicherheitssystemverbund (1) dient zur Überwachung eines Bereichs (2), wie beispielsweise einer Lagerhalle oder Fabrik, in welcher sich Objekte (3) in Form von Personen (4) und Maschinen (5) gemeinsam bewegen. Die Maschinen (5) verarbeiten und/oder transportieren Produkte (8) und/oder stellen diese her. Der Sicherheitssystemverbund (1) umfasst eine zentrale Steuereinrichtung (14), die dazu ausgebildet ist, um von einer Vielzahl von Überwachungseinheiten (9) Sensordaten (10) zu empfangen, in denen die im zu überwachenden Bereich (2) von den Überwachungseinheiten (9) erfassten Objekte (3) enthalten sind. Die zentrale Steuereinrichtung (14) ist dazu ausgebildet, um für die Personen (4) anhand der Sensordaten (10) einen Sicherheitslevel (16) zu berechnen, der die Gefährdungslage der Personen (4) in dem zu überwachten Bereich (2) angibt. Die zentrale Steuereinrichtung (14) umfasst ein Optimierungsmodul (15), wobei das Optimierungsmodul (15) dazu ausgebildet, um einerseits die Leistung (21) Maschinen (5) zu optimieren und um andererseits den Sicherheitslevel (16) der Personen (4) zu optimieren.

Fig. 2

EP 4 650 119 A1

**Beschreibung**

Die Erfindung betrifft einen Sicherheitssystemverbund zur Überwachung eines Bereichs und ein Verfahren zum Betrieb des Sicherheitssystemverbunds.

Bereiche wie Fabriken und Lagerhallen werden mehr und mehr automatisiert oder zumindest teilweise automatisiert betrieben. In diesem Fall bewegen sich Maschinen, wie beispielsweise Roboter oder autonom fahrende Fahrzeuge und Menschen in demselben Bereich. Eine solche Fabrik kann auch als "Smart Factory" bezeichnet werden. Sie ist eine hochgradig digitalisierte, modulare und vernetzte Produktionsanlage, die auf einer intelligenten Fertigung unter Einsatz von autonomen Systemkomponenten, wie beispielsweise autonomer mobiler Roboter (AMRs) oder autonomer Fahrzeuge (AGVs - autonomous guided vehicle), basiert. Eine zentrale Eigenschaft einer solchen Fabrik ist deren Wandlungsfähigkeit in Bezug auf nicht vorhersehbare Änderungen des Fertigungsprozesses. Diese Wandlungsfähigkeit muss sich auch in den Eigenschaften der Fabrik wiederfinden, welche eine möglichst hohe Zuverlässigkeit des Produktionsprozesses bei gleichzeitiger Anwesenheit von Menschen in der Fabrik gewährleistet.

Es ist daher eine Aufgabe der vorliegenden Erfindung, eine Möglichkeit zu schaffen, eine solch wandlungsfähige Fabrik sowohl sicher als auch effizient zu betreiben.

Die Aufgabe wird durch den Sicherheitssystemverbund gemäß dem unabhängigen Anspruch 1 und durch ein Verfahren zum Betrieb des Sicherheitssystemverbunds gemäß dem nebengeordneten Anspruch 15 gelöst. Die Ansprüche 2 bis 14 beschreiben vorteilhafte Weiterbildungen des Sicherheitssystemverbunds.

Der erfindungsgemäße Sicherheitssystemverbund dient zur Überwachung eines Bereichs, wie beispielsweise einer Lagerhalle oder Fabrik, in welchem sich Objekte in Form von Personen und Maschinen gemeinsam bewegen, wobei die Maschinen Produkte verarbeiten und/oder herstellen und/oder transportieren. Bei den Maschinen handelt es sich beispielsweise um Roboter, Förderbänder und/oder autonom fahrende Fahrzeuge. Der Sicherheitssystemverbund umfasst eine zentrale Steuereinrichtung, die dazu ausgebildet ist, um von einer Vielzahl von Überwachungseinheiten Sensordaten zu empfangen, in denen die im zu überwachenden Bereich von den Überwachungseinheiten erfassten Objekte enthalten sind. Die zentrale Steuereinrichtung ist bevorzugt dazu ausgebildet, um für die Personen anhand der Sensordaten einen Sicherheitslevel zu berechnen, der die Gefährdungslage der Personen in dem zu überwachenden Bereich angibt. Die zentrale Steuereinrichtung umfasst weiterhin insbesondere ein Optimierungsmodul, wobei das Optimierungsmodul bevorzugt dazu ausgebildet ist, um einerseits die Leistung, wie beispielsweise den Produktdurchsatz der Maschinen zu optimieren und um andererseits den Sicherheitslevel der Personen zu optimieren.

Es ist besonders vorteilhaft, dass bevorzugt alle oder insbesondere die meisten der vorhandenen Datenströme (Sensordaten) verwendet werden, um eine dynamische Beurteilung des aktuellen, sowie zukünftigen Verletzungsrisikos für bevorzugt jede sich in der Fabrik bzw. der Lagerhalle befindende Person zu erstellen. Diese personenbezogenen Beurteilungen werden als "Sicherheitslevel" bezeichnet. Die Sicherheitslevel bilden zusammen mit den Sensordaten den zu überwachenden "Bereich". Die zu optimierenden Parameter, nämlich die Leistung bzw. Effizient, also insbesondere der Produktdurchsatz, der Fabrik bzw. Lagerhalle (z. B. Stückzahl pro Zeit), werden durch minimal einzuhaltende Sicherheitslevel limitiert. Daher ergib sich eine Optimierungsaufgabe unter Nebenbedingungen. Im Kontrast zur Betrachtung der "Verfügbarkeit" auf Maschinenebene, basiert der hier vorgestellte Ansatz auf einer ganzheitlichen Betrachtung von Mensch-Maschine-Interaktionen als dynamisches, nichtlineares Mehrgrößensystem.

In einer vorteilhaften Weiterbildung ist das das Optimierungsmodul dazu ausgebildet, um den Sicherheitslevel der Personen und die Leistung, beispielsweise den Produktdurchsatz der Maschinen anhand von Eigenschaften der Personen und anhand von Eigenschaften der Maschinen zu optimieren. Eigenschaften der Personen können auch als Mensch-Modelle bezeichnet werden. Eigenschaften der Maschinen können auch als Maschinen-Modelle bezeichnet werden.

In einer vorteilhaften Weiterbildung ist das Optimierungsmodul dazu ausgebildet, um den Sicherheitslevel der Personen und die Leistung, also insbesondere den Produktdurchsatz der Maschinen in Echtzeit zu optimieren.

In einer vorteilhaften Weiterbildung ist die zentrale Steuereinrichtung dazu ausgebildet, um anhand der Sensordaten die Eigenschaften der Personen und die Eigenschaften der Maschinen zu ermitteln. Ergänzend oder alternativ ist die zentrale Steuereinrichtung dazu ausgebildet, um Eigenschaften von einer, einigen oder allen Maschinen von dieser Maschine oder diesen Maschinen zu empfangen. Bei diesen Eigenschaften kann es sich beispielsweise um die Position, den (geplanten) Bewegungsablauf und/oder die Temperatur dieser Maschine handeln. Ergänzend oder alternativ ist die zentrale Steuereinrichtung dazu ausgebildet, um Eigenschaften der Personen und Eigenschaften der Maschinen aus zumindest einer Speichereinheit zu laden. In dieser Speichereinheit können beispielsweise bestimmte Eigenschaften für die Person oder die Maschine gespeichert sein, die sich nicht bzw. nicht so schnell ändern. Beispielsweise kann gespeichert sein, seit wann die Person die ihr zugewiesene Arbeit schon ausführt, was ein Indiz für die Zuverlässigkeit dieser Person ist. Eine Person, die eine Tätigkeit erst seit kurzem ausübt, ist unsicherer als eine Person, die diese Tätigkeit schon lange ausübt. Auch kann das Gewicht der Maschine gespeichert sein. Derartige Informationen müssen nicht zwingend von den Überwachungseinheiten an die zentrale Steuereinrichtung übertragen werden. In diesem Fall umfasst die zentrale Steuereinrichtung oder sogar das Optimierungsmodul die Speichereinheit.

In einer vorteilhaften Weiterbildung handelt es sich bei den Eigenschaften der Personen um zumindest eine der nachfolgenden Informationen:

- Position der Person;
- geplante Route, die die Person geht;
- geplanter Bewegungsablauf, den die Person ausführt;
- Zuverlässigkeit der Person;
- Herzfrequenzvariabilität;
- Hautleitfähigkeit;
- Elektrodermale Aktivität;
- Muskelaktivität;
- Körperkerntemperatur.

Die Zuverlässigkeit der Person umfasst beispielsweise die Information, wie lange diese Person bereits in dem Betrieb arbeitet, wie lange diese Person die aktuelle Tätigkeit ausführt, wie lange die Person an diesem Tag bereits arbeitet und wann die letzte Pause war. Die Zuverlässigkeit der Person kann auch die Erfahrung und das Fachwissen der Person umfassen, z.B. ob sie geschult oder qualifiziert ist, um bestimmte Aufgaben auszuführen oder bestimmte Maschinen zu bedienen. Die physische und psychische Verfassung der Person, z.B. ob sie müde, gestresst oder abgelenkt ist, oder ob sie unter dem Einfluss von Alkohol, Drogen oder Medikamenten steht kann ebenfalls durch die Zuverlässigkeit der Person ausgedrückt werden. Selbiges kann auch für die persönlichen Präferenzen und das Verhalten der Person gelten, z.B. ob sie vorsichtig oder risikofreudig ist, oder ob sie die Sicherheitsvorschriften und -protokolle befolgt oder ignoriert.

In einer vorteilhaften Weiterbildung handelt es sich bei den Eigenschaften der Maschinen um zumindest eine der nachfolgenden Informationen:

- Position der Maschine;
- geplante Route, die die Maschine fährt;
- Geschwindigkeit, die die Maschine fährt;
- geplanter Bewegungsablauf der Maschine (z.B. Drehung links (Roboter);
- Temperatur der Maschine;
- Lautstärke der Maschine;
- Gewicht der Maschine;
- Art der Produkte, die die Maschine herstellt;
- Funktion und Aufgabe der Maschine;
- Schnittstellen und Kommunikationsprotokolle der Maschine;
- Sicherheits- und Wartungsanforderung der Maschine.

In einer vorteilhaften Weiterbildung ist das Optimierungsmodul oder die zentrale Steuereinrichtung dazu ausgebildet, um die geplante Route von zumindest einer Maschine solange zu ändern, bis der Sicherheitslevel einer Person, die sich in der Nähe dieser Maschine befindet oder bis der Sicherheitslevel einer Person, der durch die Maschine beeinflusst wird, über einem Schwellwert liegt. Die Berechnung des Sicherheitslevel erfolgt für die Zukunft bis zu einem vorgebbaren Zeitpunkt, beispielsweise von 60 s oder mehreren Minuten. Grundsätzlich sind auch mehrere Stunden möglich, z.B. 4, 12 oder 24 Stunden. Ergänzend oder alternativ ist das Optimierungsmodul oder die zentrale Steuereinrichtung dazu ausgebildet, um die zumindest eine Person zu kontaktieren, dass diese ihre Bewegungsrichtung ändert, bevor die Leistung, also insbesondere der Produktdurchsatz der Maschine unter einen Schwellwert sinkt. Beispielsweise kann das Optimierungsmodul oder die zentrale Steuereinrichtung hierfür eine elektronische Nachricht erzeugen und an die zumindest eine Maschine oder an die zumindest eine Person übertragen, die die zumindest eine Maschine und/oder die zumindest eine Person auffordert ihre geplante Route zu ändern.

In einer vorteilhaften Weiterbildung umfasst das Optimierungsmodul eine, vorzugweise vortrainierte, KI-Einheit. Die KI-Einheit ist dazu ausgebildet, um anhand der Eigenschaften der Personen und anhand der Eigenschaften der Maschinen, die Leistung, insbesondere den Produktdurchsatz der Maschinen und den Sicherheitslevel der Personen zu optimieren.

Aufgrund der hohen Dimensionalität der Systemparameter (d. h. alle Daten, welche die Umgebung definieren) und inhärenten Nichtlinearitäten, bietet sich ein auf künstliche Intelligenz (KI) basiertes System an, um diese Aufgabe möglichst optimal zu lösen. Bevorzugt erfolgt eine Bereitstellung der aktuellen und zukünftigen Maschinendaten über ein digitales Abbild von Maschinen und Anlagen sowie deren Prozesse in der Produktion und Fertigung. Ein Konzept hierfür ist durch die Verwaltungsschale (engl. Asset Administration Shell (AAS)) bzw. den Digital Twin gegeben. Durch die Verfügbarkeit der Daten des Job Scheduler können Maschinendaten über den aktuellen Fertigungsprozess hinaus zur Verfügung gestellt werden. Weiterhin erfolgt eine Bereitstellung der Positionen von Personen über die (anonymisierte) Auswertung optischer Verfahren oder Sender / Empfänger Messprinzipien. Daten aus der AAS können verwendet werden, um mittels "intent modelling" Bewegungstrajektorien der Personen vorherzusagen. Außerdem erfolgt eine Bereitstellung der Positionen von autonom fahrenden Fahrzeugen. Es ebenfalls versucht Bewegungstrajektorien dieser autonom fahrenden Fahrzeuge und/oder von Personen vorherzusagen, weil die autonom fahrenden Fahrzeuge und insbesondere auch die Personen autonom agieren und ihr (Fahr-)Verhalten zum Teil nicht deterministisch ist. Außerdem erfolgt bevorzugt eine Kartographierung der dynamischen Produktionsumgebung via simultaneous localization and mapping (SLAM) der der autonom fahrenden Fahrzeuge, sowie eine Auswertung der Daten stationär angeordneter Überwachungseinheiten. Optional erfolgt eine Übertragung von Sensordaten von Überwachungseinheiten wie beispielsweise Schallintensität und Temperatur.

Durch die KI-Einheit kann sich insbesondere bei großen und/oder komplexen Maschinen und/oder zu überwachenden Bereichen ein Vorteil ergeben. Bei solch komplexen Vorgängen kann durch die KI-Einheit Optimierungspotential aufgefunden werden, welches bei einer manuellen bzw. menschlichen Planung von Arbeitsabläufen nicht mehr möglich ist. Durch die KI-Einheit können beispielsweise (positive) Auswirkungen auf den Produktionsablauf erkannt und genutzt werden, die aufgrund der Komplexität des überwachten Bereichs konventionell nicht erkennbar und/oder nutzbar waren. Beispielsweise kann der Sicherheitssystemverbund zumindest 10, 100 oder 1.000 Personen und/oder Maschinen überwachen, wobei Sensordaten von beispielsweise zumindest 10, 100, 1.000 oder 10.000 Überwachungseinheiten empfangen werden können.

Die KI-Einheit ist u.a. mit den oben genannten Daten vortrainiert. Für das Training der KI-Einheit können die oben genannten Daten auch in einer Simulationsumgebung virtuell erzeugt werden.

Für das Training der KI-Einheit kann die KI-Einheit insbesondere mit der Simulationsumgebung, welche z.B. einen digitalen Zwilling des überwachten Bereichs und/oder der Maschinen umfasst, gekoppelt werden. Die KI-Einheit kann dann zum Training simulierte Sensordaten von der Simulationsumgebung erhalten. Diese simulierten Sensordaten können bevorzugt den später im produktiven bzw. realen Einsatz erhaltenen Sensordaten nachempfunden sein bzw. den realen Sensordaten entsprechen. Die KI-Einheit kann im Training dann die Personen und/oder Maschinen in der Simulationsumgebung steuern, wobei die KI-Einheit z.B. durch Versuch und Irrtum, versucht, gemäß der Belohnungsfunktion eine Optimierung herbeizuführen. Das Training kann in einer Vielzahl von Iterationen erfolgen und erst dann beendet werden, wenn z.B. der Wert der Belohnungsfunktion einen vorbestimmten Schwellenwert überschreitet. Die so trainierte KI-Einheit kann dann im realen Betrieb des Sicherheitssystemverbunds eingesetzt werden, wobei im realen Betrieb dann die realen Sensordaten der KI-Einheit zugeführt wird und wobei dann eine Steuerung der realen Maschinen und/oder Personen erfolgt.

Alternativ oder zusätzlich kann das Training der KI-Einheit auch umfassen, dass der KI-Einheit Aufzeichnungen von realen Sensordaten zur Verfügung gestellt werden. Dabei kann die KI-Einheit beim Training basierend auf diesen Sensordaten keine Steuerungsmöglichkeit besitzen, sondern kann lediglich aus den Sensordaten vorteilhafte Handlungs- und/oder Steuerungsmöglichkeiten ableiten.

Wie erläutert ist es das Ziel dieser Erfindung das Verletzungsrisiko der Personen zu minimieren bei höchstmöglicher Leistung, insbesondere bei höchstmöglicher Verfügbarkeit bzw. Produktdurchsatz der Fabrik bzw. der Lagerhalle. Um das Verletzungsrisiko zu quantifizieren, wird jeder Person ein Sicherheitslevel zugewiesen. Der Sicherheitslevel kann auch als "Safety Score" bezeichnet werden. Grundlage des Sicherheitslevels ist das akute, sowie das statistisch ermittelte Kollisionsrisiko in n Zeitschritten.

Der Sicherheitslevel einer Person ist z.B. definiert von 0 bis 10, wobei 0 eine sehr kritische Sicherheitssituation und 10 keine Gefahr darstellt. Er setzt sich zusammen aus Eintrittsscore und Schadensausmaß in n Zeitschritten. Die KI-Einheit ist dazu ausgebildet, um den Sicherheitslevel der Personen kontinuierlich neu zu ermitteln. Für die Berechnung des Sicherheitslevels werden als Inputparameter die Eigenschaften der Personen und die Eigenschaften der Maschinen, sowie optional eine dynamische 2D und/oder 3D Karte des zu überwachenden Bereichs verwendet. Die Eigenschaften der Personen sollten insbesondere eine geplante Route umfassen, die die jeweilige Person geht, also eine Trajektorienprädiktion. Ergänzend sollten noch Geschwindigkeitsprofile für die jeweilige Person vorliegen. Optional werden durch ermittelte Körpermaße detaillierte Aussagen über das Schadensausmaß bei einer Kollision möglich. Weitere Eigenschaften der Person, die ihren Sicherheitslevel beeinflussen, sind die Erfahrung und das Fachwissen der Person, z.B. ob sie geschult oder qualifiziert ist, um bestimmte Aufgaben auszuführen oder bestimmte Maschinen zu bedienen. Die physische und psychische Verfassung der Person, z.B. ob sie müde, gestresst oder abgelenkt ist, oder ob er unter dem Einfluss von Alkohol, Drogen oder Medikamenten steht kann ebenfalls durch die Zuverlässigkeit der Person ausgedrückt werden. Selbiges kann auch für die persönlichen Präferenzen und das Verhalten der Person gelten, z.B. ob sie vorsichtig oder risikofreudig ist, oder ob sie die Sicherheitsvorschriften und - protokolle befolgt oder ignoriert.

Mittels der Eigenschaften der Maschinen (Maschinen-Modelle) ist das Verhalten der Maschine unter verschiedenen Bedingungen vorhersagbar. Diese Informationen können auch verwendet werden, um Auswirkungen von Änderungen an der Maschine zu bewerten, bevor diese Änderungen durchgeführt werden. Die Eigenschaften der Maschine werden unter anderem durch die nachfolgenden Informationen beschrieben. Hierzu gehören die physikalischen und technischen Eigenschaften der Maschinen, wie z.B. ihre Größe, Form, Gewicht, Leistung, Energieverbrauch, Temperatur, Lärmpegel, Vibration. Weiterhin zählen auch Funktionen und Aufgaben der Maschinen hinzu, wie z.B. ihre Rolle in der Produktionskette, ihre Fertigungs- oder Bearbeitungsprozesse, ihre Qualitäts- oder Effizienzkriterien, etc. Außerdem sind Schnittstellen und Kommunikationsprotokolle der Maschinen, wie z.B. ihre Sensoren, Aktuatoren, Steuerungen, Signale, Datenübertragung von Bedeutung. Schlussendlich zählen auch die Sicherheits- und Wartungsanforderungen der Maschinen, wie z.B. ihre Schutzvorrichtungen, Notfallmaßnahmen, Fehlererkennung, Reparatur- oder Austauschverfahren dazu.

Für eine Berechnung des Sicherheitslevels wird/werden bevorzugt nur die Person(en) als nicht-deterministisch modelliert. Das heißt, dass lediglich die Personen durch ihre Bewegungen nicht-deterministischen Einfluss auf die Umgebung nehmen und beispielsweise einen Safety-Stop einer Maschine, wie beispielsweise eines autonom fahrenden Fahrzeugs veranlassen. Die KI-Einheit ist dazu ausgebildet, um den Einfluss der menschlichen Trajektorien in Abhängigkeit der Ziele auf die Umgebung zu verfolgen. Die KI-Einheit ist dazu ausgebildet, um einzuschätzen, welche Ziele der Personen im Kontext des Systems zu einem kritischen Sicherheitslevel führen können. Konkret erstellt die KI-Einheit automatisiert Kombinationen aus den Inputparametern und lernt deren Auswirkungen auf den Sicherheitslevel. Die KI-Einheit ist dann dazu ausgebildet, um die Genauigkeit und die Zuverlässigkeit des Sicherheitslevels zu verbessern, indem sie die Datenströme, die Eigenschaften der Maschinen, die Belohnungsfunktion und die Lernalgorithmen zur Optimierung durch reale Messdaten aus dem Anwendungsfall anpasst.

Von der KI-Einheit werden unter Einbezug relevanter Inputparameter, eine Eintrittsscore und Schadensausmaß eingelernt. Für das Schadensausmaß ist bevorzugt ein hartkodiertes Regelwerk definiert/hinterlegt. Das Ausmaß des Schadens für die Personen definiert sich neben dem Ort der Kollision (z.B. Kopf oder Beine) aus den Komponenten Geschwindigkeit, Gewicht, Kollisionswinkel und Beschaffenheit des kollidierenden Körpers.

Der Sicherheitslevel ist eine Momentaufnahme unter Berücksichtigung vergangener, aktueller, und geschätzter Parameter, also insbesondere der Eigenschaften der Personen und der Eigenschaften der Maschinen. Die Angabe des Sicherheitslevels geht stets mit einer Angabe der Zuverlässigkeit dieses Scores einher. Aufgrund der zeitlichen Abhängigkeit des Sicherheitslevels wird dieser auch in verschiedenen Zeitabschnitten angegeben:

-    $t+0$: Sicherheitslevel zum aktuellen Zeitpunkt (z.B. niedrig, falls Mensch nahe eines sich bewegenden Roboterarms steht)
-    $t+n$: Sicherheitslevel unter Berücksichtigung aller Parametern bis zum Zeitpunkt $t+n$ in die Zukunft
-    n kann vordefiniert sein (z.B. 10 s).
-    n kann dynamisch sein. Das heißt n ist groß, falls hohe Zuverlässigkeit in der Prädiktion der Parameter besteht.

Zusätzlich zu qualitativen Untersuchungen des Sicherheitslevels, kann die Validierung des Sicherheitslevels in zwei Teilen erfolgen:

-    Durch eine proper scoring rule, um die prognostizierte Eintrittsscore eines sicherheitskritischen Events in n Zeitschritten zu evaluieren.

-    Durch die Schadensausmaße des zu Erwarteten Ereignisses.

Um mehrere Personen in dem zu überwachenden Bereich in Betracht zu ziehen, ist der Sicherheitssystemverbund in einer vorteilhaften Weiterbildung dazu ausgebildet, um die Verletzungsrisiken für alle Personen zu aggregieren. Dieser aggregierte Sicherheitslevel berücksichtigt die individuellen Sicherheitslevel der einzelnen Personen sowie die Wechselwirkungen zwischen ihnen. Zum Beispiel ist der Sicherheitssystemverbund dazu ausgebildet, um zu erkennen, ob sich zwei oder mehr Personen auf Kollisionskurs befinden oder ob sie sich gegenseitig behindern oder gefährden. Der Sicherheitssystemverbund ist dazu ausgebildet, um dann entsprechende Maßnahmen zu ergreifen, um die Sicherheit aller Personen zu gewährleisten, wie z.B. die autonom fahrenden Fahrzeuge umzuleiten, die Personen zu warnen oder zu koordinieren, oder die Maschinen zu modifizieren oder zu stoppen.

Zum Trainieren der KI-Einheit können unterschiedliche Sensordaten verwendet werden. Zum Beispiel kann es sich bei den Überwachungseinheiten um optische Sensoren handeln. Bevorzugt erfolgt in dem zu überwachenden Bereich eine Installation von hochauflösenden Kameras, Lidars und/oder Radars an strategischen Punkten, um eine 360-Grad-Sicht, insbesondere auf die Produktionsbereiche, zu ermöglichen. Diese optischen Sensoren erfassen Echtzeitbilder, die zur Erkennung der Objekte verwendet werden. Ergänzend oder alternativ kann ein "Simultaneous Localization and Mapping (SLAM)"-System für autonom fahrende Fahrzeuge verwendet werden, um eine präzise Navigation ohne vordefinierte Wege zu ermöglichen. Die Überwachungseinheiten können auch Umweltsensoren umfassen. In diesem Fall umfassen die Überwachungseinheiten Sensoren zur Messung von Temperatur, Feuchtigkeit und/oder Luftqualität, um die Arbeitsbedingungen zu überwachen und die Maschinenleistung entsprechend anzupassen.

Grundsätzlich ist es jedoch denkbar eine KI-Einheit ohne das vorstehend beschriebene Training einzusetzen.

So kann das KI-Modul auch ein Zero-Shot Learning Modul und/oder ein Large Language Model (Foundation Model) umfassen, welches in der Lage wäre, nur anhand von Erfahrungswerten während des laufenden Betriebes, das System zu steuern.

Die Zuverlässigkeit des Sicherheitslevels ist ein Maß dafür, wie genau geglaubt wird, dass der berechnete Sicherheitslevels die tatsächliche Sicherheitssituation widerspiegelt. Die Zuverlässigkeit könnte als Funktion der Vorhersagegenauigkeit der Parameter (Informationen) definiert werden, die in die Berechnung des Sicherheitslevels einfließen.

Ein Berechnungsbeispiel wäre:

$$R(t) = h(Parametergenauigkeit)$$

Die "Genauigkeit der Parameter" könnte eine Kombination aus verschiedenen Faktoren sein, wie zum Beispiel:

Die Genauigkeit der Sensoren (Überwachungseinheiten), die die Daten liefern.
Die Qualität der KI-Modelle, die zur Vorhersage der zukünftigen Bewegungen von Personen und autonom fahrenden Fahrzeugen verwendet werden.
Die Aktualität der Daten, die in die Berechnung einfließen.

Die genaue Definition von R hängt von den spezifischen Anforderungen und Gegebenheiten der Fabrik oder Lagerhalle ab.

Als ergänzende Sicherheitsmaßnahme zu dem Sicherheitslevel dienen Überwachungseinheiten wie Laserscanner und Lichtschranken, die als finale Schutzbarriere an sämtlichen Maschinen mit Gefahrenpotential angebracht werden.

Die Belohnungsfunktion während des Trainings der KI-Einheit kann durch folgendes Berechnungsbeispiel angegeben werden. Mathematisch könnte die Belohnungsfunktion wie folgt aussehen:

$R(s, a) = w1 \cdot R_{sicherheit}(s, a) + w_2 \cdot R_{produktion}(s, a) + w_3 \cdot Rumgebung(s, a) + w_4 \cdot R_{zeit}(s, a)$

Hierbei ist s der aktuelle Zustand des Systems, a die Aktion, die von der zentralen Steuereinrichtung ausgeführt wird, und w_i sind die Gewichtungen, die der Betreiber der Fabrik oder Lagerhalle festlegt. Die Funktionen $R_{sicherheit}$, $R_{Produktion}$, $R_{Umgebung}$, und $R_{Zeit}$ repräsentieren die einzelnen Komponenten der Belohnung.

Weiterhin kann gelten:

- Sicherheitsgewichtete Belohnung: Diese kann durch den Sicherheitslevel S der Personen in der Fabrik repräsentiert werden. Eine mögliche Funktion könnte sein:

$$R_{sicherheit}(s, a) = S(s, a)$$

wobei S(s, a) den Sicherheitslevel nach Ausführung der Aktion a im Zustand s darstellt.

- Produktionsgewichtete Belohnung: Diese könnte durch die Leistung, insbesondere durch den Produktdurchsatz P repräsentiert werden. Eine mögliche Funktion könnte sein:
$R_{produktion}(s, a) = P(s, a)$ wobei P(s, a) der Produktdurchsatz nach Ausführung der Aktion a im Zustand s darstellt.

- Faktoren zur Umgebungsanpassung: Diese könnten durch eine Funktion U repräsentiert werden, die misst, wie gut die zentrale Steuereinrichtung auf Veränderungen in den Datenströmen reagiert. Eine mögliche Funktion könnte sein:

$$R_{umgebung}(s, a) = U(s, a)$$

wobei U(s, a) ein Maß für die Anpassungsfähigkeit des Systems nach Ausführung der Aktion a im Zustand s ist.

- Zeitaspekte: Diese könnten durch eine Funktion T repräsentiert werden, die misst, wie nahe die Agenten einem festgelegten Zeitpunkt kommen. Eine mögliche Funktion könnte sein:

$$R_{\text{zeit}}(s, a) = T(s, a)$$

wobei T(s, a) ein Maß für die zeitliche Nähe zum Zielzeitpunkt nach Ausführung der Aktion a im Zustand s ist.

Diese Funktionen müssen an die spezifischen Anforderungen und Gegebenheiten der Fabrik oder Lagerhalle angepasst werden. Es ist auch wichtig zu beachten, dass die Gewichtungen $w\_i$ so gewählt werden müssen, dass sie den Prioritäten des Betreibers entsprechen. Sie könnten beispielsweise durch maschinelles Lernen optimiert werden, um das gewünschte Verhalten des Systems zu erreichen. Im laufenden Betrieb müssen Methodiken angewandt werden, um Daten und Konzeptdrift zu beobachten und zu minimieren. Da die Datenverteilung im Laufe der Zeit abweicht, ist die Modellentwicklung keine einmalige Aufgabe, sondern ein kontinuierlicher Prozess. Es empfiehlt sich, die eingehenden Daten kontinuierlich zu überwachen und das Modell mit neueren Daten neu zu trainieren, wenn bekannt ist, dass die Datenverteilung von der ursprünglichen Verteilung der Trainingsdaten abweicht oder die Ziel Metriken sich in nicht akzeptabler Größenordnung verschlechtern.

Für die Optimierung werden zwei Szenarien unterschieden. In einer ersten Alternative besteht kein Schreibzugriff auf den Job Scheduler der Fabrik oder Lagerhalle. In einer zweiten Alternative besteht Schreibzugriff auf den Job Scheduler der Fabrik oder Lagerhalle. In beiden Szenarien besteht die Möglichkeit die Systemparameter der abzusichernden Maschinen zu schreiben (z.B. Limitierung der Kraft/Geschwindigkeit). Im Vergleich zu Alternative 1., besteht in Alternative 2. die Möglichkeit die Anordnung/Aufteilung der Fertigungsaufträge zu modifizieren, um das Optimierungsproblem bestmöglich zu lösen.

Alle relevanten, messbaren, Systemparameter der Umgebung werden aufgezeichnet und einem sog. Optimierungsagenten, der auch als Optimierungsmodul bezeichnet werden kann, zur Verfügung gestellt. Dieser Optimierungsagent hat die Aufgabe das Verletzungsrisiko zu minimieren, bei gleichzeitig höchstmöglicher Verfügbarkeit der Fabrik oder Lagerhalle. Der Optimierungsagent kann verschiedene Aktionen ausführen, um die Fabrik oder Lagerhalle anzupassen, wie z. B. die Geschwindigkeit oder den Abstand der Maschinen zu ändern, die Routen der der Maschinen in Form von autonom fahrenden Fahrzeugen zu planen oder die Anordnung der modularen Elemente zu verändern. Neben Anpassung der Maschinen, kann der Optimierungsagent auch die Handlungen der Personen durch Empfehlungen beeinflussen. Personen können über ein Augmented Reality (AR) Gerät Handlungsempfehlungen, wie die bestmögliche Reihenfolge von Maschinenwartungen, oder die sicherste und effizienteste Route, beispielsweise zu einem Lagerregal, erhalten. Ebenso ist es möglich Personen und Maschinen simultan zu optimieren, um eine höchstmögliche Leistung (Produktdurchsatz) bei gleichzeitiger Sicherheit (Sicherheitslevel) der Personen zu gewährleisten. In einer Simulation kann hierdurch das theoretische Maximum an Leistung (Produktdurchsatz) der Fabrik oder Lagerhalle prognostiziert werden.

Die Handlung des Optimierungsmoduls, um das das Optimierungsproblem bestmöglich zu lösen, ist beeinflusst von den beobachteten Systemparametern der Umgebung, sowie einer Belohnungsfunktion, deren Wert sich aus den Auswirkungen der vorherigen Handlungen auf die Umgebung ableitet. Die einzelnen Komponenten der Belohnungsfunktion setzen sich hierbei wie unten aufgelistet zusammen. Die Gewichtung der Komponenten definiert über die Belohnungsfunktion das Verhalten der Fabrik oder Lagerhalle. Der Betreiber der Fabrik oder Lagerhalle führt die individuelle Gewichtung je nach gewünschtem Systemverhalten durch:

- Sicherheitsgewichtete Belohnung: Die primäre Komponente der Belohnungsfunktion sollte die Sicherheit der in der Fabrik arbeitenden Personen widerspiegeln. Hierbei wird der Sicherheitslevel der einzelnen Personen berücksichtigt. Je höher der Sicherheitslevel, desto sicherer wird die Person in der Fabrik sein. Das Nicht-Einhalten dieser Sicherheitsanforderung führt zu einer starken Abnahme der Belohnung.

- Produktionsgewichtete Belohnung: Da die Aufgabe auch darin besteht, die Leistung der Maschinen, also insbesondere die Produktion zu optimieren, ist die Belohnung auch von der Leistung, also dem Produktdurchsatz der Fabrik oder Lagerhalle abhängig. Dies kann beispielsweise die Stückzahl pro Zeiteinheit sein. Je mehr Produkte hergestellt werden, desto besser die Belohnung.

- Faktoren zur Umgebungsanpassung: Da die Umgebung der Fabrik oder Lagerhalle und ihre Daten sich im Laufe der Zeit ändern können, enthält die Belohnungsfunktion auch Faktoren zur Umgebungsanpassung. Dies beinhaltet, wie gut das Optimierungsmodul auf Veränderungen in den Datenströmen reagiert und die Sicherheitslevel der Personen entsprechend anpasst. Die agentenbasierte Systemoptimierung ist in der Lage in Echtzeit auf Veränderungen der Umgebung, wie beispielweise eine neuartige räumliche Anordnung von Produktionsinseln, zu reagieren.

- Zeitaspekte: Die Belohnung kann auch abhängig von zeitlichen Aspekten sein. Es könnte beispielsweise ein Zeitpunkt festgelegt werden, zu dem die Sicherheitslevel optimiert sein sollten. Je näher das Optimierungsmodul,

also die KIEinheit in diesem Optimierungsmodul, diesem Zeitpunkt kommt, desto höher die Belohnung. Diese Komponente ist sinnvoll, falls beispielsweise zu einem bestimmten Zeitpunkt komplexe Maschinenwartungen durchgeführt werden müssen.

Um die KI-Einheit zu trainieren, müssen Datenquellen zur Verfügung stehen, die das zu optimierende Gesamtsystem realitätsnah beschreiben. Neben gemessenen Daten aus der Fabrik oder Lagerhalle, können hierbei synthetisch erzeugte Daten sowie Simulationsumgebungen verwendet werden.

Zusätzlich der Berücksichtigung des Sicherheitslevel, werden Sensorsysteme verbaut, um im Falle einer unerwünschten unmittelbar bevorstehenden Kollision den Sicherheitssystemverbund in einen sicheren Zustand zu versetzen.

Unter Berücksichtigung der oben im Detail ausgeführten Beschreibungen der Komponenten des Sicherheitssystemverbunds, wird im Folgenden noch ein konkreter Anwendungsfall beschrieben. Maschinenwartung mit Sicherheitslevel:

Eine Person führt eine regelmäßige Wartung an einer Maschine durch, die hohe Temperaturen erzeugt. Sie trägt eine Augmented Reality Gerät in Form einer Brille, die mit der zentralen Steuereinrichtung, die das Optimierungsmodul mit der KI-Einheit umfasst, verbunden ist. Die zentrale Steuereinrichtung berechnet den Sicherheitslevel der Person basierend auf den Daten der Fabrik oder Lagerhalle, wie z.B. die Position und Geschwindigkeit der Maschine und die der Person, die Temperatur und Lärmbelastung in der Umgebung, die Erfahrung und Qualifikation der Person. Der Sicherheitslevel gibt an, wie sicher die Person bei dieser Wartung sein wird. Wenn der Sicherheitslevel zu niedrig ist, z.B. unter 5, schlägt das Optimierungsmodul (der Optimierungsagent) der Person über das Augmented Reality Gerät vor, die Wartung zu verschieben oder zusätzliche Schutzmaßnahmen zu ergreifen, wie z.B. das Tragen von Schutzhandschuhen oder bestimmte Bereiche zu meiden, die ein hohes Kollisionsrisiko mit Maschinen oder anderen Personen haben und schlägt zeitgleich eine sicherere und effizientere Route vor. Die Person kann die Empfehlungen akzeptieren oder ablehnen, je nach seiner Erfahrung und seinem Fachwissen. Die zentrale Steuereinrichtung passt sich an das Feedback der Person an und lernt, seine Empfehlungen zu verbessern. Wenn der Sicherheitslevel hoch genug ist, d.h. einen vorbestimmten Schwellenwert überschreitet, z.B. über 8 ist, gibt die zentrale Steuereinrichtung der Person eine positive Rückmeldung, um die Wartung durchzuführen. Die zentrale Steuereinrichtung überwacht kontinuierlich den Sicherheitslevel der Person und passt die Eigenschaften der Maschinen (Maschinenparameter) entsprechend an, um das Verletzungsrisiko zu minimieren. Zum Beispiel kann die zentrale Steuereinrichtung die Temperatur oder die Geschwindigkeit der Maschine reduzieren, wenn die Person sich ihr sehr wahrscheinlich nähert. Die zentrale Steuereinrichtung optimiert auch die Leistung (Produktivität, insbesondere den Produktdurchsatz) der Fabrik oder Lagerhalle, indem es die Wartungszeiten und -häufigkeiten an die Fertigungsanforderungen anpasst.

Ein weiterer Anwendungsfall beinhaltet die flexible Arbeitsplatzgestaltung: Mehrere Personen arbeiten in der Fabrik oder Lagerhalle an verschiedenen Projekten, die unterschiedliche Maschinen und Ressourcen erfordern. Sie nutzen das hier vorgeschlagene System, um ihre Arbeitsplätze flexibel zu gestalten. Die zentrale Steuereinrichtung ermittelt die Fähigkeiten, aktuelles Wohlbefinden und Präferenzen der Personen, sowie die Verfügbarkeit und den Zustand der Maschinen in der Fabrik oder Lagerhalle. Die zentrale Steuereinrichtung schlägt den Mitarbeitern die geeigneten Arbeitsplätze vor, die ihren Bedürfnissen entsprechen und die Produktivität unter Berücksichtigung der Sicherheitslevel maximieren. Die Personen können die Vorschläge akzeptieren oder ablehnen. Die zentrale Steuereinrichtung passt sich an das Feedback der Personen an und lernt, seine Vorschläge zu verbessern. Durch diese Methode kann die Arbeitsplatzgestaltung flexibler, effektiver und angenehmer gestaltet werden.

Das Optimierungsmodul oder die zentrale Steuereinrichtung ist optional auch dazu ausgebildet, um in eine Karte die verschiedenen Gefahrenquellen einzuzeichnen. Beispielsweise kann eine Dimension die Temperaturen kartographieren, eine weitere Dimension kann die Lärmbelastung darstellen. Je nach Anwenderwunsch können die Bereiche einzeln oder eine kombinierte und nach spezifischen Dimensionen gewichtete Auswertung dargestellt werden.

Neben dem Ansatz mit einem Optimierungsmodul in der zentralen Steuereinrichtung, ist auch ein Ansatz mehrerer Optimierungsmodule, z.B. ein Optimierungsmodul pro Maschine, als alternative Ausführung denkbar. Dies erfordert die Fähigkeit, Informationen innerhalb der Optimierungsmodule auszutauschen.

Neben der Person kann der Sicherheitslevel auch auf beliebige Komponenten der Fabrik oder Lagerhalle angewendet werden. Beispielsweise können autonom fahrende Fahrzeuge mit nicht-deterministischem Fahrverhalten ebenfalls durch den Sicherheitslevel bewertet werden.

Die Belohnungsfunktion kann so erweitert werden, dass neben dem Sicherheitslevel der Personen und der Leistung der Maschinen auch die Effizienz der Personen miteingeschlossen ist. Letzteres wird als "Human-in-the-loop machine learning" bezeichnet. Auch das Wohlbefinden der Personen kann in die Belohnungsfunktion mit einbezogen werden. Das Wohlbefinden der Personen kann über physiopsychologische Messgrößen abgeschätzt werden. Diese Messgrößen können beinhalten:

- Herzfrequenzvariabilität (HRV): Die HRV ist ein Maß für die Fähigkeit des Herzens, sich an verschiedene Anforderungen anzupassen. Eine höhere HRV ist mit besserer Gesundheit und Wohlbefinden verbunden

- Hautleitfähigkeit (HL): Die HL ist ein Maß für die elektrische Leitfähigkeit der Haut. Sie kann als Indikator für emotionale Erregung und Stress dienen.

- Elektrodermale Aktivität (EDA): Die EDA ist ein Maß für die elektrische Aktivität der Haut. Sie kann als Indikator für emotionale Erregung und Stress dienen.

- Muskelaktivität (EMG): Das EMG ist ein Maß für die elektrische Aktivität der Muskeln. Es kann als Indikator für körperliche Anspannung und Stress dienen.

- Körperkerntemperatur (KKT): Die KKT ist ein Maß für die Temperatur im Inneren des Körpers. Sie kann als Indikator für Stress und körperliche Anstrengung dienen.

Ein konkreter Anwendungsfall zur Verwertung physiopsychologische Messgrößen kann beispielsweise wie folgt aussehen: Eine Person arbeitet an einer Maschine, die schwere Gegenstände bewegt. Die zentrale Steuereinrichtung erkennt, dass die Person gestresst ist und eine hohe körperliche Aktivität aufweist. Die zentrale Steuereinrichtung sendet eine Warnung an das Augmented Reality Gerät der Person, die ihn auffordert, eine Pause einzulegen und sich zu entspannen. Wenn die Person die Warnung ignoriert, kann die zentrale Steuereinrichtung die Maschine automatisch stoppen, um eine Verletzung zu vermeiden. Wenn die Person die Warnung akzeptiert, kann die zentrale Steuereinrichtung die Arbeitsbedingungen anpassen, um sicherzustellen, dass die Person in einer sicheren und gesunden Umgebung arbeitet. Beispielsweise kann die zentrale Steuereinrichtung die Temperatur und Luftfeuchtigkeit im Raum anpassen oder die Beleuchtung ändern, um den Stresspegel der Person zu reduzieren.

Die KI-Einheit kann eine Vielzahl von Knoten umfassen. Eingangsknoten in einer KI-Einheit sind die ersten Knoten oder Neuronen, die Daten aus der Außenwelt empfangen. Sie bilden die Eingangsschicht des Netzwerks, die mit den Datenquellen verbunden ist. Diese Eingangsschicht nimmt die rohen Daten, wie numerische Werte, Bilder oder Texte, auf und leitet sie an die nächste Schicht im Netzwerk weiter. In der KI-Verarbeitung dient sie als grundlegender Punkt für den Informationsfluss, indem sie die externen Informationen aufnimmt und an nachfolgende verborgene Schichten weitergibt, die für die eigentliche Analyse und Mustererkennung verantwortlich sind. Den Eingangsknoten können Informationen über die erfassten Objekte in dem zu überwachenden Bereich zugeführt werden. So können den Eingangsknoten die Positionen der erfassten Personen, der Maschinen sowie von stationären Hindernissen wie Wänden und/oder Paletten zugeführt werden. Den Eingangsknoten können ebenfalls Bewegungsvektoren für die erfassten Personen sowie von sich bewegenden Maschinen in Form von autonom fahrenden Fahrzeugen zugeführt werden. Den Eingangsknoten können auch Ziele zugeführt werden, die die erfassten Personen sowie die sich bewegenden Maschinen erreichen wollen. Den Eingangsknoten können auch Informationen zugeführt werden, die angeben, ob Maschinen in Form von Robotern in absehbarer Zeit Produkte benötigen bzw. Produkte ausgeben, die transportiert werden müssen. Den Eingangsknoten können auch Informationen über die erfassten Personen zugeführt werden. Sind die Personen entsprechend qualifiziert, sind die Personen konzentriert oder übermüdet. Den Eingangsknoten können ebenfalls Informationen über mögliche Gefahrenquellen hinzu geführt werden. Diese Informationen können die Art der Gefahrenquelle und die Position der Gefahrenquelle beinhalten. In welchen Teilen des zu überwachenden Bereichs ist es gerade sehr laut oder sehr heiß.

Zwischenknoten der KI-Einheit, auch als verborgene Knoten oder Neuronen in verborgenen Schichten (Zwischenschichten) bezeichnet, sind die Knoten in einem künstlichen neuronalen Netzwerk, die zwischen der Eingangs- und der Ausgangsschicht liegen. Sie nehmen die Daten von den Eingangsknoten auf, verarbeiten diese mithilfe verschiedener mathematischer Funktionen und übermitteln die transformierten Informationen an die nächste Schicht. Diese Knoten sind dafür verantwortlich, die komplexen Muster und Beziehungen in den Eingangsdaten zu erkennen und ermöglichen es dem Netzwerk, komplexe Aufgaben wie Bilderkennung, Sprachverarbeitung oder Vorhersagen zu bewältigen. Durch Anpassung der Gewichtung zwischen diesen Knoten kann das Netzwerk lernen, indem es seine Verbindungen optimiert und präzisiert, wie die Daten verarbeitet werden.

Grundsätzlich kann es mehrere Zwischenschichten mit einer Vielzahl von Zwischenknoten geben. Die Gewichtung der einzelnen Zwischenknoten zueinander spielt eine zentrale Rolle in der Funktionsweise künstlicher neuronaler Netzwerke. Jedes neuronale Netz besteht aus Schichten von Knoten, die durch gewichtete Verbindungen miteinander verbunden sind. Diese gewichteten Verbindungen bestimmen die Stärke des Signals, das von einem Knoten zum nächsten weitergeleitet wird. Wenn ein Eingabewert oder das Ergebnis eines vorherigen Knotens in die Berechnung eines Zwischenknotens einfließt, wird er mit einer entsprechenden Gewichtung multipliziert. Das Ergebnis dieser Multiplikation wird mit anderen gewichteten Eingabewerten summiert und durch eine Aktivierungsfunktion, wie die Sigmoid- oder ReLU-Funktion, geleitet. Diese Funktion entscheidet dann, ob das Signal weitergegeben wird oder nicht. Der Lernprozess des Neuronalen Netzwerks besteht darin, diese Gewichtung schrittweise zu optimieren. Durch Training, wie etwa den Backpropagation-Algorithmus, werden die Gewichte so angepasst, dass das neuronale Netzwerk besser in der Lage ist, Vorhersagen oder Klassifikationen durchzuführen. Das neuronale Netzwerk passt die Gewichtung entsprechend den Fehlern an, die es bei der Vorhersage oder Klassifikation gemacht hat, um diese Fehler in zukünftigen Durchläufen zu minimieren. Dadurch lernen die Zwischenknoten, die relevanten Muster und Merkmale aus den Daten zu erkennen, indem sie die richtigen Gewichtungen zu anderen Knoten finden. Diese Optimierung der Gewichtungen ist entscheidend dafür, dass das Netzwerk seine Leistung verbessert und in der Lage ist, komplexe Zusammenhänge zu verstehen.

Wie eingangs erwähnt kann die KI-Einheit mit aufgezeichneten Messdaten oder simulierten Messdaten trainiert werden.

Ausgangsknoten einer KI-Einheit sind die Knoten in einem künstlichen neuronalen Netzwerk, die die verarbeiteten Informationen aus den vorherigen Schichten (den Zwischenschichten) aufnehmen und das Endergebnis liefern. Sie bilden die Ausgangsschicht und geben die endgültige Vorhersage, Klassifikation oder den resultierenden Wert an den Benutzer oder ein anderes System weiter. Die Anzahl und Art der Ausgangsknoten hängt von der spezifischen Aufgabe ab: Ein einzelner Knoten kann beispielsweise einen numerischen Wert für eine Regression bereitstellen, während mehrere Knoten für die Klassifikation verwendet werden, um eine Kategorie vorherzusagen. Ihre Werte repräsentieren das Ergebnis der komplexen Mustererkennung und Verarbeitung, die in den vorherigen Schichten stattgefunden hat. Beispielsweise können die Sicherheitslevel für die verschiedenen Personen durch die Ausgangsknoten ausgegeben werden. Es kann für jede Person mehrere Ausgangsknoten geben, wobei die verschiedenen Ausgangsknoten die Sicherheitslevel für dieselbe Person aber zu unterschiedlichen Zeitpunkten darstellen. Ausgangsknoten können ebenfalls eine Position für die Personen wiedergeben. Es kann für jede Person mehrere Ausgangsknoten geben, wobei die verschiedenen Ausgangsknoten die Positionen für dieselbe Person aber zu unterschiedlichen Zeitpunkten darstellen. Es kann auch für jede Maschine in Form eines autonom fahrenden Fahrzeugs mehrere Ausgangsknoten geben, wobei die verschiedenen Ausgangsknoten die Sicherheitslevel für dasselbe autonom fahrende Fahrzeug aber zu unterschiedlichen Zeitpunkten darstellen. Ausgangsknoten können ebenfalls eine Position für die Maschinen in Form autonom fahrender Fahrzeuge wiedergeben. Es kann für jedes autonom fahrende Fahrzeug mehrere Ausgangsknoten geben, wobei die verschiedenen Ausgangsknoten die Positionen für dasselbe autonom fahrende Fahrzeug aber zu unterschiedlichen Zeitpunkten darstellen.

Das Optimierungsmodul ist beispielsweise anhand der Werte der Ausgangsknoten in der Lage festzustellen, welche Person gefährdet ist und wodurch, beispielsweise durch welche Maschine, die Gefährdung herrührt. So kann das Optimierungsmodul bzw. die zentrale Steuereinrichtung die Person informieren, dass diese ihre Route ändert bzw. es kann die entsprechende Maschine informiert werden, dass diese die Route ändert bzw. einen Notstopp ausführt.

Das vorgeschlagene Konzept der KI-Einheit, das auf neuronalen Netzwerken basiert, ist ein gängiges KI-Werkzeug zur Datenverarbeitung und Mustererkennung. Dennoch müssen die Prinzipien der künstlichen Intelligenz nicht ausschließlich auf neuronale Netze beschränkt sein. Die KI-Einheit kann auch ohne Neuronen konzipiert werden, also frei von Neuronen sein, und dennoch effektiv Aufgaben lösen. Die KI-Einheit kann auch Entscheidungsbäume, Support-Vector-Maschinen, symbolische KI, Expertensysteme oder evolutionäre Algorithmen nutzen bzw. umfassen. Die KI-Einheit kann auch andere Ansätze zur Problemlösung verwenden. Symbolische KI verwendet beispielsweise logische Regeln und Wissensrepräsentationen, um Schlussfolgerungen zu ziehen und Entscheidungen zu treffen. Expertensysteme hingegen basieren auf einem umfangreichen Regelwerk, das von menschlichen Experten erstellt wird, um spezifische Probleme in einem bestimmten Bereich zu lösen. Evolutionäre Algorithmen simulieren den Prozess der natürlichen Selektion, um optimale Lösungen für komplexe Probleme zu finden. Zusammenfassend lässt sich sagen, dass die hier vorgeschlagene KI-Einheit nicht auf neuronale Netzwerke beschränkt ist. Verschiedene KI-Systeme können je nach Anforderung und Kontext in der KI-Einheit eingesetzt werden, um effiziente und effektive Lösungen (vgl. Daten der Ausgabeknoten) zu bieten unter Verwendung der oben beschriebenen Daten der Eingabeknoten.

In einer vorteilhaften Weiterbildung ist die KI-Einheit des Optimierungsmoduls der zentralen Steuereinrichtung dazu ausgebildet, um anhand der Sensordaten eine geplante Route der Maschinen zu ermitteln. Die KI-Einheit ist weiter dazu ausgebildet, um anhand der Sensordaten eine geplante Route der Personen zu ermitteln. Anhand dieser ermittelten Routen der Maschinen und der ermittelten Routen der Personen ist die KI-Einheit dann dazu ausgebildet, um den jeweiligen Sicherheitslevel der Personen zu berechnen.

In einer vorteilhaften Weiterbildung ist die KI-Einheit dazu ausgebildet, um aus den Sensordaten Eigenschaften der Personen zu ermitteln, wobei es sich bei den Eigenschaften der Personen insbesondere um die geplante Route handelt, die die Personen in Zukunft gehen werden. Ergänzend oder alternativ ist die KI-Einheit dazu ausgebildet, um aus den Sensordaten Eigenschaften der Maschinen zu ermitteln, wobei es sich bei den Eigenschaften der Maschinen insbesondere um die geplante Route handelt, die die Maschinen, insbesondere in Form von autonom fahrenden Fahrzeugen, in Zukunft fahren werden.

In einer vorteilhaften Weiterbildung entspricht der Sicherheitslevel einer dynamischen Beurteilung des aktuellen, sowie zukünftigen Verletzungsrisikos für die jeweilige Person in dem zu überwachenden Bereich der Fabrik oder Lagerhalle.

In einer vorteilhaften Weiterbildung entspricht die Leistung, also insbesondere der Produktdurchsatz der Maschinen einer Anzahl von Teilen pro Zeiteinheit. Ein solcher Produktdurchsatz kann die Herstellung von X Teilen pro Zeiteinheit, aber auch den Transport von X Teilen pro Zeiteinheit umfassen. Muss eine Maschine in Form eines autonom fahrenden Fahrzeugs Umwege fahren um zum Ziel zu kommen, so sinkt die Leistung, weil sich die Fahrzeit erhöht um eine bestimmte Anzahl von Teilen zu transportieren. Die Leistung kann auch der Energieverbrauch der Maschinen sein.

In einer vorteilhaften Weiterbildung sind die Sicherheitslevel von Person zu Person unterschiedlich.

In einer vorteilhaften Weiterbildung sind die Sicherheitslevel für jede Person unterschiedlich.

In einer vorteilhaften Weiterbildung sind die Sicherheitslevel für zumindest zwei Personen identisch.

In einer vorteilhaften Weiterbildung ist die Leistung, also insbesondere der Produktdurchsatz für zwei identische Maschinen gleich oder unterschiedlich.

In einer vorteilhaften Weiterbildung umfasst der Sicherheitssystemverbund die Vielzahl von Überwachungseinheiten.

In einer vorteilhaften Weiterbildung umfasst der Sicherheitssystemverbund die Maschinen.

In einer vorteilhaften Weiterbildung handelt es sich bei den Überwachungseinheiten um stationär angeordnete Überwachungseinheiten, wie beispielsweise LIDAR- und/oder Radarsensoren und/oder Lichttaster und/oder Lichtschranken und/oder Lichtgitter und/oder induktive Näherungssensoren und/oder Kameras. Diese Überwachungseinheiten sind dazu ausgebildet, um Informationen über detektierte Objekte in Form von Sensordaten auszugeben.

In einer vorteilhaften Weiterbildung handelt es sich bei den Überwachungseinheiten um stationär angeordnete Überwachungseinheiten, wie beispielsweise Temperatursensoren. Diese Überwachungseinheiten sind dazu ausgebildet, um eine Temperatur an dem Ort, an welchem sie installiert sind, oder um eine Temperatur an einem beabstandeten Ort, beispielsweise über einen Laser, zu erfassen und als Sensordaten auszugeben.

In einer vorteilhaften Weiterbildung sind einige oder alle der stationär angeordneten Überwachungseinheiten mit der zentralen Steuereinrichtung über eine Kabelverbindung zur Übertragung der Sensordaten verbunden.

In einer vorteilhaften Weiterbildung handelt es sich bei den Überwachungseinheiten um stationär angeordnete Überwachungseinheiten, wie beispielsweise Sicherheitszuhaltungen und/oder automatisierte Türsystem. Diese Überwachungseinheiten sind dazu ausgebildet, um den Zustand (offen, geschlossen) einer Tür zu ermitteln und als Sensordaten auszugeben.

In einer vorteilhaften Weiterbildung handelt es sich bei den Überwachungseinheiten um stationär angeordnete Überwachungseinheiten, wie beispielsweise Mikrofone. Diese Überwachungseinheiten sind dazu ausgebildet, um eine Lautstärke an dem Ort, an welchem sie installiert sind oder um eine Lautstärke an einem beabstandeten Ort, zu erfassen und als Sensordaten auszugeben.

In einer vorteilhaften Weiterbildung handelt es sich bei den Überwachungseinheiten um mitfahrend angeordnete Überwachungseinheiten. Diese Überwachungseinheiten sind vorzugsweise an einer Maschine angeordnet, also montiert. Bei der Maschine kann es sich um einen Roboter, ein Förderband bzw. um ein autonom fahrendes Fahrzeug handeln. Die Arten dieser mitfahrend angeordneten Überwachungseinheiten können dieselben sein wie die Arten der stationär angeordneten Überwachungseinheiten. So kann es sich bei den mitfahrend angeordneten Überwachungseinheiten beispielsweise um LIDAR- und/oder Radarsensoren und/oder um Kameras handeln. Folglich sind die mitfahrend angeordneten Überwachungseinheiten ebenfalls dazu ausgebildet, um detektierte Objekte, Temperaturen und/oder Lautstärken zu ermitteln und in Form von Sensordaten an die zentrale Steuereinrichtung zu übermitteln.

In einer vorteilhaften Weiterbildung handelt es sich bei den Überwachungseinheiten um solche, die durch eine Person mit bewegt werden. Bei einer solchen Überwachungseinheit kann es sich um ein Augmented Reality Gerät handeln. Ergänzend oder alternativ kann es sich um ein Gerät zur Positionsbestimmung der Person, zur Bestimmung der Herzfrequenzvariabilität der Person, zur Bestimmung der Hautleitfähigkeit der Person, zur Bestimmung der elektrodermalen Aktivität der Person, zur Bestimmung der Muskelaktivität der Person und/oder zur Bestimmung der Körperkerntemperatur der Person handeln.

In einer vorteilhaften Weiterbildung ist das Optimierungsmodul und insbesondere die KI-Einheit des Optimierungsmoduls dazu ausgebildet, um den Bewegungsablauf von zumindest einer Maschine derart anzupassen, dass sich der Sicherheitslevel einer Person in der Nähe dieser Maschine erhöht. Grundsätzlich kann dies auch allgemein durch die zentrale Steuereinrichtung erledigt werden. Die "Nähe" ist vorgebbar und beispielsweise abhängig vom Typ der Maschine (Roboter, autonom fahrendes Fahrzeug) und/oder von der Person (mehr oder weniger zuverlässig). Die Nähe kann mehr als 2m, 5m, 10m, 15m oder mehr als 20m umfassen oder kleiner sein als 30m, 25m, 15m oder kleiner als 10 m. Der Wortlaut "in der Nähe" kann auch Zeitpunkte in der Zukunft umfassen, wobei insbesondere der Zeitraum in der Zukunft, z.B. 60 s, vorgebbar ist. Nur in einem solchen Zeitraum wird überprüft, ob sich eine Person näher als eine bestimmte, insbesondere vorgebbare, Distanz an einer Maschine befindet.

In einer vorteilhaften Weiterbildung ist das Optimierungsmodul oder die zentrale Steuereinrichtung dazu ausgebildet, um die (Fahrt)Route einer Maschine in Form eines autonom fahrenden Fahrzeugs zu ändern, damit der Sicherheitslevel von zumindest einer Person in der Nähe dieser Maschine dadurch über einem bestimmten Schwellwert liegt. Ergänzend oder alternativ ist das Optimierungsmodul oder die zentrale Steuereinrichtung dazu ausgebildet, um den Bewegungsablauf einer Maschine in Form eines Roboters zu ändern, damit der Sicherheitslevel von zumindest einer Person in der Nähe dieser Maschine dadurch über einem bestimmten Schwellwert liegt. Vorzugsweise erledigt dies die KI-Einheit innerhalb des Optimierungsmoduls.

In einer vorteilhaften Weiterbildung ist das Optimierungsmodul oder die zentrale Steuereinrichtung dazu ausgebildet, um eine elektronische Nachricht zu erzeugen und diese an die zumindest eine Person zu übertragen, dass diese ihre Bewegungsrichtung ändert, damit der Sicherheitslevel von der zumindest einen Person über einem bestimmten Schwellwert liegt und die Leistung zumindest einer Maschine über einem bestimmten Schwellwert liegt. Grundsätzlich kann auch die KIEinheit des Optimierungsmoduls die elektronische Nachricht erzeugen.

In einer vorteilhaften Weiterbildung umfasst der Sicherheitssystemverbund ein Augmented Reality Gerät, welches durch die Person, welche ihre Bewegungsrichtung ändern soll, tragbar ist. Die elektronische Nachricht ist dann auf dem Augmented Reality Gerät anzeigbar ist

In einer vorteilhaften Weiterbildung ist mittels der elektronische Nachricht oder mittels einer weiteren elektronischen Nachricht, die an das Augmented Reality Gerät übertragbar ist, welches durch die Person, welche ihre Bewegungsrichtung ändern soll, eine neue Bewegungsrichtung übertragbar. Die Person kann dann einem visualisierten Indikator, beispielsweise einem Pfeil, folgen, wodurch sich der Sicherheitslevel der Person erhöht.

In einer vorteilhaften Weiterbildung ist das Optimierungsmodul oder die zentrale Steuereinrichtung dazu ausgebildet, um eine elektronische Nachricht zu erzeugen und an eine Sicherheitszuhaltung und/oder Schiebetüranlage zu übertragen, sodass diese eine aktuell oder in Zukunft gefährdete Person nicht in einen bestimmten Teil des Bereichs lässt, wenn der Sicherheitslevel diese Person aktuell oder zukünftig unter einem vorbestimmten Sicherheitslevel liegt bzw. liegen würde. Grundsätzlich kann auch die KI-Einheit des Optimierungsmoduls die elektronische Nachricht erzeugen.

In einer vorteilhaften Weiterbildung ist das Optimierungsmodul oder die zentrale Steuereinrichtung dazu ausgebildet, um Gefahrenquellen, wie beispielsweise hohe Temperaturen oder Lärm, der zumindest einen Person über eine elektronische Nachricht mitzuteilen.

In einer vorteilhaften Weiterbildung ist das Optimierungsmodul dazu ausgebildet, um bei Optimierung der Leistung der Maschinen Abhängigkeiten von Maschinen untereinander mit zu berücksichtigen. Stellt eine erste Maschine Ausgangsprodukte her, die an eine zweite und eine dritte Maschine, die parallel zueinander arbeiten, zugeführt werden, so erkennt das Optimierungsmodul, dass eine verminderte Leistung der ersten Maschine unmittelbar zu einer verminderten Leistung der zweiten und dritten Maschine führt. Umgekehrt führt eine verminderte Leistung der zweiten Maschine nicht zu einer verminderten Leistung der dritten Maschine. Nähert sich eine Person der ersten Maschine, so wird das Optimierungsmodul zuerst versuchen die Person zu kontaktieren und diese aufzufordern den Bereich in der Nähe der ersten Maschine zu verlassen (damit der Sicherheitslevel der Person ansteigt), bevor das Optimierungsmodul die Leistung der ersten Maschine reduziert. Nähert sich die Person dagegen der zweiten oder dritten Maschine, so kann es sein, dass das Optimierungsmodul die Leistung der zweiten bzw. dritten Maschine reduziert und die Person den Bereich in der Nähe der zweiten bzw. dritten Maschine betreten kann. Wird beispielsweise die Leistung der zweiten Maschine durch das Optimierungsmodul reduziert, so kann das Optimierungsmodul auch dazu ausgebildet sein, um die Leistung der dritten Maschine zu erhöhen, um dadurch die verminderte Leistung der zweiten Maschine zu kompensieren.

In einer vorteilhaften Weiterbildung ist das Optimierungsmodul oder die zentrale Steuereinrichtung dazu ausgebildet, um die Position der Personen und der Maschinen in eine Karte für den Bereich der Fabrik oder Lagerhalle einzuzeichnen. Dadurch gibt es eine sehr gute Übersicht über den Aufenthaltsort der Personen und Maschinen.

In einer vorteilhaften Weiterbildung ist das Optimierungsmodul oder die zentrale Steuereinrichtung dazu ausgebildet, um Gefahrenquellen in die Karte für den Bereich einzuzeichnen. Dadurch wird die Übersicht über die zu überwachende Fabrik bzw. Lagerhalle weiter erhöht.

In einer vorteilhaften Weiterbildung ist das Optimierungsmodul dazu ausgebildet, um die Position der Personen und der Maschinen und/oder die der Gefahrenquellen für verschiedene Zeitpunkte in der Zukunft bezogen auf einen Startzeitpunkt zu ermitteln, wobei das Optimierungsmodul oder die zentrale Steuereinrichtung dazu ausgebildet ist, um diese Positionen in die Karte einzuzeichnen und als Vorschau für einen Benutzer zu visualisieren.

In einer vorteilhaften Weiterbildung ist der Startzeitpunkt fest, wobei das Optimierungsmodul oder die zentrale Steuereinrichtung dazu ausgebildet ist, um diese Positionen ausgehendend von dem festen Startzeitpunkt in der Vergangenheit für eine bestimmte Zeitdauer für die Zukunft zu berechnen und in Form der Vorschau für den Benutzer zu visualisieren. Beispielsweise kann der feste Startzeitpunkt in der Vergangenheit die Position der Personen und Maschinen um 9:00 Uhr angeben und die bestimmte, insbesondere durch einen Benutzer vorgebbare Zeitdauer soll 5 Minuten betragen. In diesem Fall wird ausgehend von den bis 9 Uhr vorliegenden Eigenschaften für die Personen und den vorliegenden Eigenschaften für die Maschinen, die bezogen auf den festen Startzeitpunkt zukünftigen Positionen der Personen und Maschinen berechnet und für den Benutzer visualisiert.

In einer vorteilhaften Weiterbildung umfasst die vorgebare Zeitdauer eine Vielzahl von Zeitpunkten, wobei für jeden Zeitpunkt die Position der Personen und Maschinen berechnet wird. Ein Abstand zwischen den Zeitpunkten kann gleich groß oder unterschiedlich sein. So kann ein zeitlicher Abstand zwischen bevorzugt zwei Zeitpunkten innerhalb der Zeitdauer größer gewählt werden, wenn der Sicherheitslevel der Personen über einem Schwellwert liegt. Der zeitliche Abstand zwischen bevorzugt zwei Zeitpunkten innerhalb der Zeitdauer kann dagegen kleiner gewählt sein, wenn der Sicherheitslevel der Personen unterhalb eines Schwellwerts liegt. In diesem Fall können gefährliche Situationen feiner aufgelöst werden. Der zeitliche Abstand zwischen den Zeitpunkten hängt dabei von dem berechneten Sicherheitslevel der Person ab und ist damit variabel.

In einer vorteilhaften Weiterbildung ist der Startzeitpunkt jeweils der aktuelle Zeitpunkt, wobei das Optimierungsmodul oder die zentrale Steuereinrichtung dazu ausgebildet ist, um diese Positionen, ausgehend von einem jeweils aktuellen Zeitpunkt für einen bestimmten, um eine bestimmte Zeit vom jeweils aktuellen Zeitpunkt in die Zukunft beabstandeten zukünftigen Zeitpunkt zu berechnen und in Form der Vorschau für den Benutzer zu visualisieren. Der zukünftige Zeitpunkt kann z.B. +30 s betragen. Folglich wird von dem jeweils aktuellen, sich veränderten, Zeitpunkt ermittelt wie die Positionen der Personen und Maschinen in dem zukünftigen Zeitpunkt sind. Diese Positionen im zukünftigen Zeitpunkt werden fortlaufend aktualisiert, da sich der aktuelle Zeitpunkt verschiebt, und in der Vorschau für den Benutzer visualisiert. Der aktuelle Zeitpunkt ist immer der Zeitpunkt für den der letzte, also aktuellste, Datensatz für die Eigenschaften der Personen und die Eigenschaften der Maschinen vorliegen. Die bestimmte Zeit, also das Delta zwischen dem aktuellen Zeitpunkt und dem zukünftigen Zeitpunkt, ist vorzugsweise durch einen Benutzer vorgebbar.

In einer vorteilhaften Weiterbildung ist die zentrale Steuereinrichtung oder das Optimierungsmodul dazu ausgebildet, um fortlaufend die Genauigkeit der Vorschau anhand der zukünftig eingehenden Sensordaten zu überprüfen. Abweichungen in der angezeigten Vorschau und der späteren eintretenden Realität können insbesondere durch das Optimierungsmodul bzw. die KI-Einheit des Optimierungsmoduls für eine aktualisierte Vorschau korrigiert werden.

Gefährliche Situationen können daher sehr früh erkannt werden, wodurch entsprechende Maßnahmen zur Vermeidung dieser gefährlichen Situationen eingeleitet werden können.

In einer vorteilhaften Weiterbildung ist das Optimierungsmodul dazu ausgebildet, um anhand der Eigenschaften zumindest eine Maschine ein Wartungsintervall für diese Maschine zu planen. So soll die Wartung insbesondere dann stattfinden bevor die Wahrscheinlichkeit eines Ausfalls dieser Maschine aufgrund einer fehlenden Wartung größer als ein voreinstellbarer Schwellwert wird. Das Optimierungsmodul stellt dabei sicher, dass die Person zu der Maschine gelangen kann, wobei der Sicherheitslevel dieser Person einen Schwellwert erreicht oder überschreitet.

In einer vorteilhaften Weiterbildung umfasst das Optimierungsmodul eine Vielzahl von Teilmodulen, wobei ein erstes Teilmodul Bestandteil der zentralen Steuereinrichtung ist und wobei ein zweites Teilmodul in einer Maschine angeordnet ist, wobei das erste und zweite Teilmodul zur Optimierung der Leistung der Maschinen und zur Optimierung des Sicherheitslevels Daten miteinander austauschen.

Das erfindungsgemäße Verfahren dient zum Betrieb des Sicherheitssystemverbunds. Dieser Sicherheitssystemverbund ist gemäß den vorherigen Ausführungen aufgebaut. In einem ersten Verfahrensschritt werden Sensordaten von einer Vielzahl von Überwachungseinheiten empfangen, wobei in den Sensordaten die im überwachten Bereich von den Überwachungseinheiten erfassten Objekte in Form von Personen und Maschinen enthalten sind. In einem zweiten Verfahrensschritt werden Sicherheitslevel für die Personen anhand der Sensordaten berechnet, wobei die Sicherheitslevel die Gefährdungslage der Personen in dem zu überwachenden Bereich angeben. In einem dritten Verfahrensschritt werden sowohl die Leistung der Maschinen als auch die Sicherheitslevel der Personen optimiert.

Zusammenfassend ermöglicht die Erfindung eine dynamische Anpassung der Sicherheitsmaßnahmen in einer Fabrik oder Lagerhalle an die sich ändernde Bedingungen und Anforderungen des Produktionsprozesses. Dies erhöht die Flexibilität und Effizienz der Fertigung, ohne die Arbeitssicherheit zu beeinträchtigen. Weiterhin nutz die Erfindung die vorhandenen Datenströme der Fabrik oder Lagerhalle, um eine individuelle Beurteilung des Verletzungsrisikos für jede Person in der Fabrik oder Lagerhalle zu erstellen. Dies erlaubt eine personalisierte und präventive Sicherheitsstrategie, die auf die Bedürfnisse und Fähigkeiten jeder Person zugeschnitten ist. Außerdem verwendet die Erfindung bevorzugt ein KI-basiertes System, um die Optimierungsaufgabe unter Nebenbedingungen auf Systemebene zu lösen. Dies ermöglicht eine schnelle und robuste Entscheidungsfindung, die auch komplexe und nichtlineare Zusammenhänge zwischen den Systemparametern berücksichtigt.

Nachfolgend wird die Erfindung rein beispielhaft unter Bezugnahme auf die Zeichnungen beschrieben. Es zeigen:

Figur 1:　　　　ein Ausführungsbeispiel, welches eine Übersicht über einen zu überwachenden Bereich einer Fabrik beschreibt, in welchem sich Objekte in Form von Personen und Maschinen gemeinsam bewegen;

Figur 2:　　　　eine Übersicht des Sicherheitssystemverbunds mit einer zentralen Steuervorrichtung und einem Optimierungsmodul zum Optimieren der Leistung der Maschinen und des Sicherheitslevels der Personen;

Figur 3:          zeigt eine durch die zentrale Steuereinrichtung erzeugte Vorschau des zu überwachenden Bereichs, wobei die Position der Personen und Maschinen zu unterschiedlichen Zeitpunkten dargestellt ist;

Figuren 4A, 4B:   zeigt die Wirkungsweise des Optimierungsmodul, um eine Route einer Maschine zu ändern, um den Sicherheitslevel einer Person zu optimieren; 4

Figuren 5A, 5B:   zeigt die Wirkungsweise des Optimierungsmodul, um eine Route einer Person zu ändern, um die Leistung einer Maschine zu optimieren; und

Figur 6:          zeigt ein Verfahren zum Betrieb des Sicherheitssystemverbunds.

Nachfolgende Figuren beschreiben die Funktionsweise des Sicherheitssystemverbunds 1.

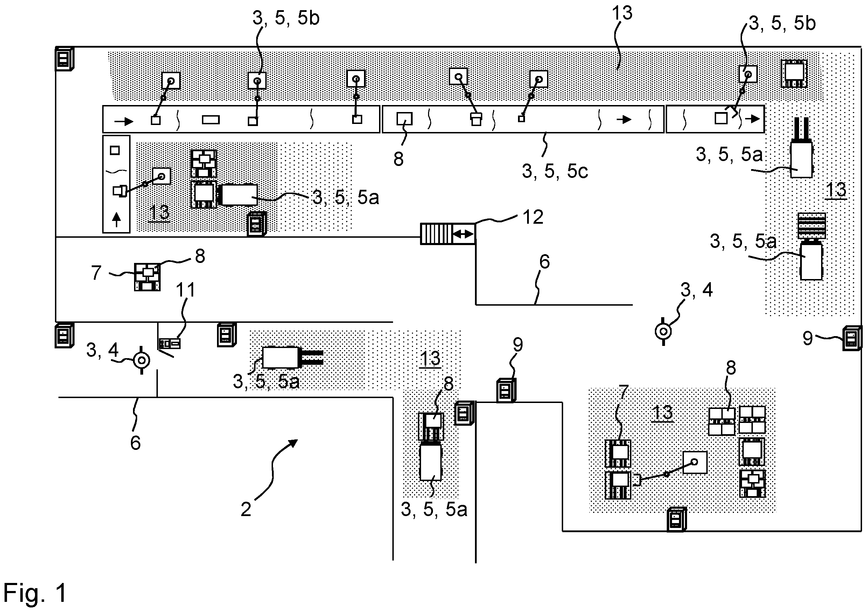

Figur 1 zeigt ein Ausführungsbeispiel, welches eine Übersicht über einen zu überwachenden Bereich 2 einer Fabrik beschreibt, in welchem sich Objekte 3 in Form von Personen 4 und Maschinen 5 gemeinsam bewegen. Bei den Maschinen 5 kann es sich beispielsweise um autonom fahrende Fahrzeuge 5a, Roboter 5b und/oder Förderbänder 5c handeln. Objekte 3 können ebenfalls stationär in Form von Wänden 6 und Paletten 7 vorliegen. Dargestellt ist außerdem, wie die Maschinen 5, in Form von Robotern 5b Produkte 8 bearbeiten bzw. verarbeiten, die auf dem Förderband 5c zwischen verschiedenen Robotern 5b bewegt werden. Verschiedene Roboter 5b führen beispielsweise einzelne Produktionsschritte aus. Die Produkte 8 können auch von den autonom fahrenden Fahrzeugen 5a transportiert werden.

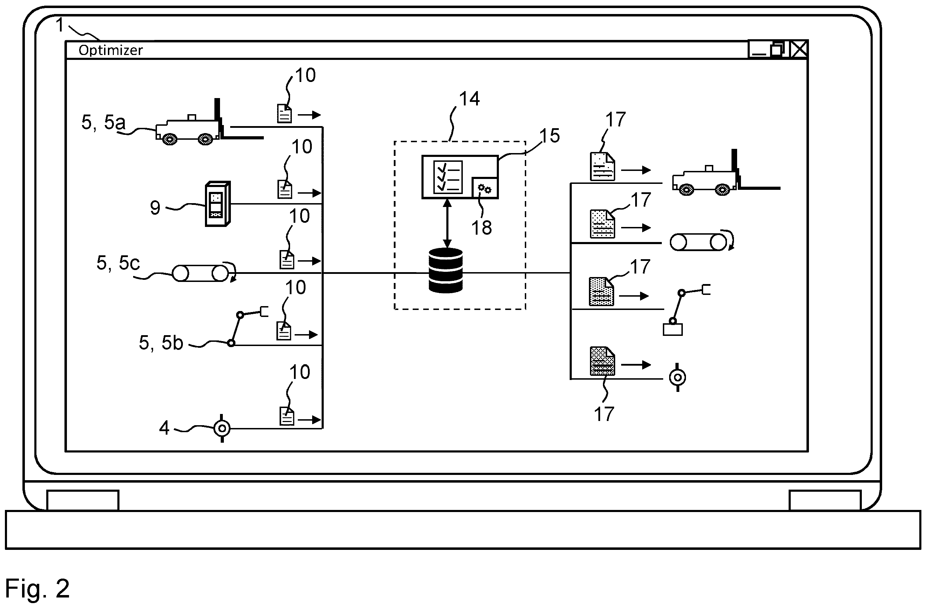

Weiterhin ist eine Vielzahl von Überwachungseinheiten 9 vorgesehen, die dazu ausgebildet sind, um Objekte 3 in dem Bereich 2 zu detektieren und diese Ergebnisse in Form von Sensordaten 10 (siehe Figur 2) auszugeben. Bei den Überwachungseinheiten 9 handelt es sich beispielsweise um Kameras, Lidar-System und/oder Radar-Systeme. Die Überwachungseinheiten 9 können stationär, beispielsweise an den Wänden 6, angeordnet sein. Die Überwachungseinheiten 9 können allerdings auch an einem autonom fahrenden Fahrzeug 5a mitfahrend angeordnet sein. Die Überwachungseinheiten 9 können auch als Sensoren durch die entsprechenden Personen 4 getragen werden und beispielsweise als Armbänder ausgeführt sein. In diesem Fall würden die Überwachungseinheiten 9 Daten der Person 4, wie beispielsweise die Herzfrequenz oder eine Position der Person 4 im Bereich 2 als Sensordaten 10 übertragen.

Dargestellt ist ebenfalls noch eine Sicherheitszuhaltung 11 und eine automatische Schiebetüranlage 12. Sowohl die Sicherheitszuhaltung 11 als auch die automatische Schiebetüranlage 12 können dazu verwendet werden, um den Zutritt zu Teilen des Bereichs 2 für Personen 4 zu reglementieren.

Dargestellt sind außerdem noch verschiedene Gefahrenbereiche 13. Je dunkler die Schraffierung ist, desto gefährdeter sind Personen 4 in diesem Gefahrenbereich 13. Gefahrenbereiche 13 befinden sich in der Umgebung der Maschinen 5. Gefahrenbereiche 13 können stationär sein, wie beispielsweise in der Umgebung der Roboter 5b oder sich bewegend, also an einem autonom fahrenden Fahrzeug 5a mitfahrend ausgebildet sein. Wie später noch erläutert wird, ist der Sicherheitssystemverbund 1 dazu ausgebildet, um eine Person 4 als gefährdend einzustufen, wenn diese sich in einem Gefahrenbereich 13 befindet oder zukünftig befinden wird.

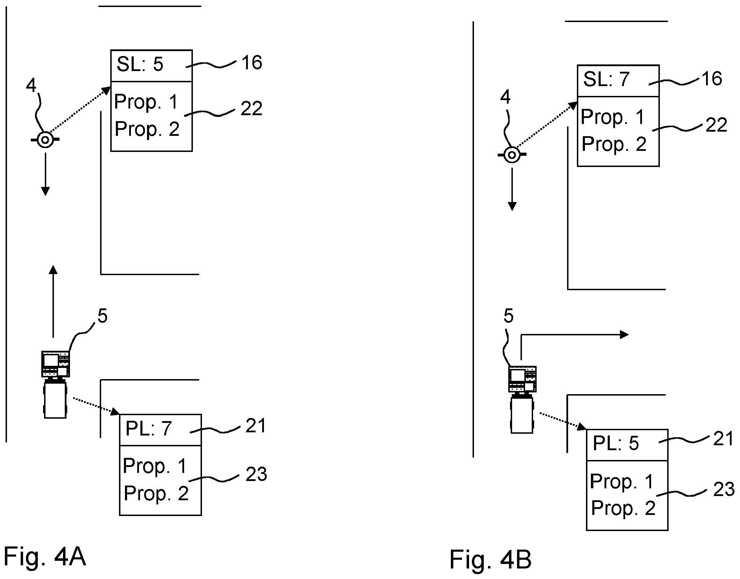

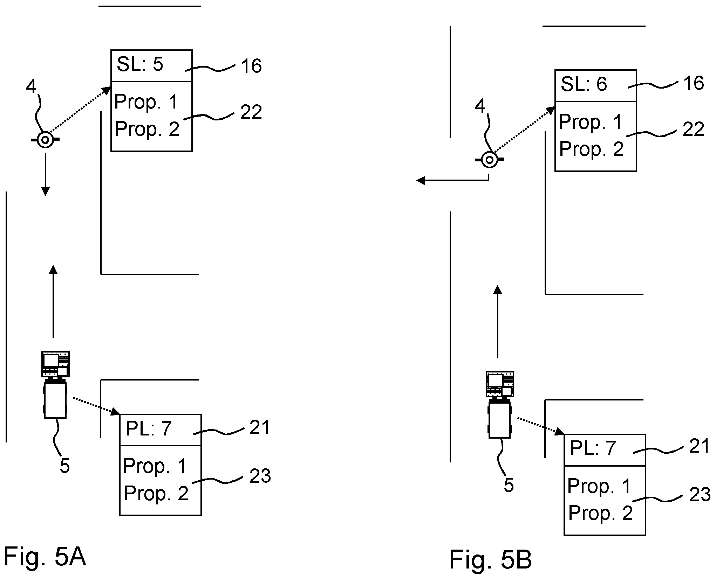

Figur 2 zeigt eine Übersicht des Sicherheitssystemverbunds 1 mit einer zentralen Steuervorrichtung 14 und einem Optimierungsmodul 15 zum Optimieren der Leistung 21 der Maschinen 5 und des Sicherheitslevels 16 (siehe Figuren 4A, 4B, 5A, 5B) der Personen 4. Die zentrale Steuereinrichtung 14 ist dazu ausgebildet, um von der Vielzahl von Überwachungseinheiten 9 Sensordaten 10 zu empfangen. In den Sensordaten 10 sind die im überwachten Bereich 2 von den Überwachungseinheiten 9 erfassten Objekte 3 enthalten. Die zentrale Steuereinrichtung 14 ist dazu ausgebildet, um für die Personen 4 anhand der Sensordaten 10 den Sicherheitslevel 16 zu berechnen, der die Gefährdungslage der Personen 4 in dem zu überwachten Bereich 2 angibt. Das Optimierungsmodul 15 ist dazu ausgebildet, um einerseits die Leistung 21 Maschinen 5 zu optimieren und um andererseits den Sicherheitslevel 16 der Personen 4 zu optimieren.

Die zentrale Steuereinrichtung 14 ist dazu ausgebildet, um anhand der Sensordaten 10 die Eigenschaften 22 der Personen 4 und/oder die Eigenschaften 23 der Maschinen 5 zu ermitteln. Dieses Ermitteln kann auch durch das Optimierungsmodul 15 der zentralen Steuereinrichtung 14 gemacht werden. Ergänzend oder alternativ ist die zentrale Steuereinrichtung 14 dazu ausgebildet, um Eigenschaften 23 von einer, einigen oder allen Maschinen 5 von dieser Maschine 5 oder diesen Maschinen 5 zu empfangen. Ergänzend oder alternativ ist die zentrale Steuereinrichtung 14 dazu ausgebildet, um Eigenschaften 22 der Personen 4 und/oder Eigenschaften 23 der Maschinen 5 aus zumindest einer Speichereinheit (nicht dargestellt) zu laden. Dieses Laden kann auch durch das Optimierungsmodul 15 der zentralen Steuereinrichtung 14 durchgeführt werden. Dargestellt ist, dass die Sensordaten 10 von den Maschinen 5, in Form der autonom fahrenden Fahrzeuge 5a, den Robotern 5b und den Förderbänder 5c an die zentrale Steuereinrichtung 14 übertragen werden. In diesem Fall sind Überwachungseinheiten 9 an den Maschinen 5 angeordnet. Weiterhin werden Sensordaten 10 von den Personen 4 an die zentrale Steuereinrichtung 14 übertragen. Die Personen 4 tragen beispielsweise eine entsprechende Überwachungseinheit 9. Bei einer wichtigen Eigenschaft der Person 4 und der Maschine 5, in Form eines autonom fahrenden Fahrzeugs, handelt es sich um eine geplante Route, die die Person 4 geht bzw. das autonom fahrende Fahrzeug fährt. Eine Eigenschaft der Person 4 kann auch der geplante Bewegungsablauf der Person 4 sein, also ob sich die Person 4 z.B. bückt.

Dargestellt ist ebenfalls, dass das Optimierungsmodul 15 oder die zentrale Steuereinrichtung 14 dazu ausgebildet ist, um eine elektronische Nachricht 17 zu erzeugen. Diese elektronische Nachricht 17 kann an die Maschinen 5, wie beispielsweise das autonom fahrende Fahrzeug 5a, den Roboter 5b oder das Förderband 5c übertragen werden. Das autonom fahrende Fahrzeug 5a kann bei Erhalt dieses elektronischen Nachricht 17 seine Route ändern und/oder seine Geschwindigkeit reduzieren und/oder einen Notstopp einleiten. Ergänzend oder alternativ kann der Roboter 5a bei Erhalt der elektronischen Nachricht 17 seine Geschwindigkeit reduzieren und/oder seinen Bewegungsablauf, beispielsweise eine längere Drehung im Uhrzeigersinn anstatt eine kürzeren Drehung gegen den Uhrzeigersinn, ändern. Ergänzend oder alternativ kann das Förderband 5b bei Erhalt der elektronischen Nachricht 17 seine Geschwindigkeit reduzieren und/oder anhalten. Die elektronische Nachricht 17 kann auch an Personen 4 übertragen werden. So können die Personen 4 ein elektronisches Gerät, insbesondere in Form eines Augmented Reality Geräts mit sich führen, welches die elektronischen Nachrichten 17 für die jeweilige Person 4 anzeigt, insbesondere visualisiert. Der Einsatz eines Augmented Reality Geräts erlaubt außerdem der Person 4 Vorschläge zu machen in welche Richtung sie nun gehen soll, damit der Sicherheitslevel 16 nicht unterhalb eines vorbestimmten Schwellwerts fällt. Wie eingangs ausgeführt kann der vorbestimmte Schwellwert von Person 4 zu Person 4 unterschiedlich hoch sein.

Die Maschine 5, in Form des autonom fahrenden Fahrzeugs, soll seine Route insbesondere nur dann ändern, wenn ansonsten der Sicherheitslevel 16 der Person 4 unter einen bestimmten Schwellwert abfallen würde. Ergänzend oder alternativ soll die Person 4 insbesondere nur dann durch die elektronische Nachricht 17 aufgefordert werden seine Route zu ändern, wenn der Sicherheitslevel 16 der Person 4 unter einem bestimmten Schwellwert abfallen würde und wenn ergänzend die Leistung 21 der Maschine 5, die zu dem unter dem Schwellwert abfallenden Sicherheitslevel 16 der Person 4 führt, unter einen Schwellwert fallen würde. In diesem Fall muss die Person 4 seine Route ändern.

Das Optimierungsmodul 15 oder die zentrale Steuereinrichtung 14 können auch dazu ausgebildet sein, um eine elektronische Nachricht 17 zu erzeugen und an eine Sicherheitszuhaltung 11 und/oder Schiebetüranlage 12 zu übertragen, sodass diese eine aktuell oder in Zukunft gefährdete Person 4 nicht in einen bestimmten Teil des Bereichs 2 lässt, wenn der Sicherheitslevel 16 aktuell oder zukünftig unter einem vorbestimmten Sicherheitslevel 16 liegt bzw. liegen würde.

Vorzugsweise umfasst das Optimierungsmodul 15 noch eine KI-Einheit 18. Die KIEinheit 18 ist bevorzugt dazu ausgebildet, um die Leistung 21 der Maschinen 5 und den Sicherheitslevel 16 der Personen 4 zu optimieren. Die KI-Einheit 18 ist vorzugsweise insbesondere dazu ausgebildet, um den Sicherheitslevel 16 der Personen 4 zu berechnen. Grundsätzlich kann die KI-Einheit 18 dazu ausgebildet sein, um die elektronische Nachricht 17 zu erzeugen. Die KI-Einheit 18 kann auch dazu ausgebildet sein, um aus den Sensordaten 10 Eigenschaften 22 der Personen 4 zu ermitteln, wobei es sich bei den Eigenschaften 22 der Personen 4 insbesondere um die geplante Route handelt, die die Personen 4 in Zukunft gehen werden. Ergänzend oder alternativ kann die KI-Einheit 18 auch dazu ausgebildet sein, um aus den Sensordaten 10 Eigenschaften 23 der Maschinen 5 zu ermitteln, wobei es sich bei den Eigenschaften 23 der Maschinen 5 insbesondere um die geplante Route handelt, die die Maschinen 5, insbesondere in Form von autonom fahrenden Fahrzeugen, in Zukunft fahren werden.

Das Optimierungsmodul 15 oder die zentrale Steuereinrichtung 14 ist dazu ausgebildet, um die Position der Personen 4 und der Maschinen 5 in eine Karte für den Bereich 2 einzuzeichnen. Eine solche Karte kann beispielsweise aussehen wie Figur 1. Die Karte kann in Echtzeit aktualisiert werden. In diese Karte können auch die Gefahrenbereiche 13 eingezeichnet werden.

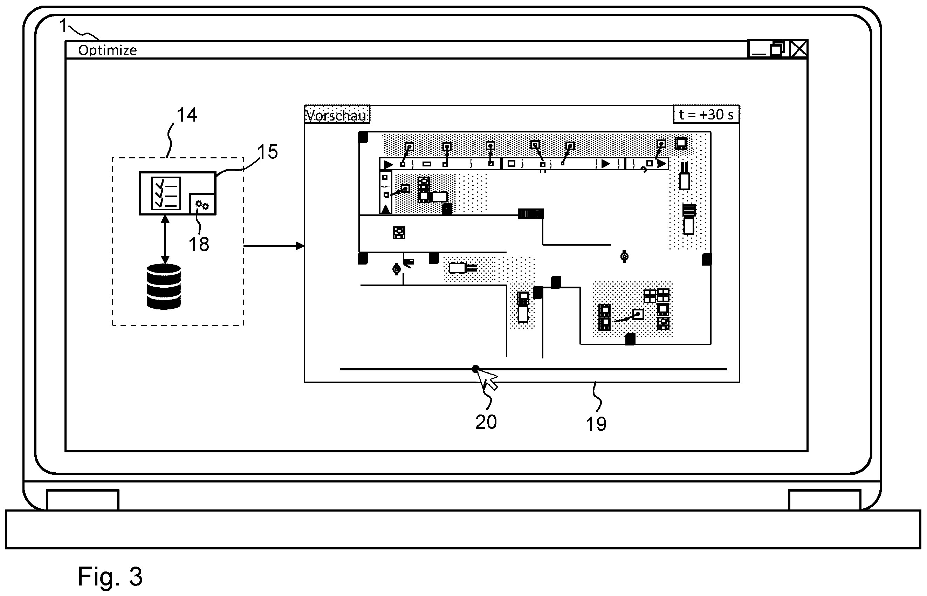

Figur 3 zeigt eine durch die zentrale Steuereinrichtung 14 erzeugte Vorschau 19 zum Zeitpunkt t = +30 s des zu überwachenden Bereichs 2. Die Position der Personen 4 und der Maschinen 5 sind dabei zu diesem Zeitpunkt in die Karte eingezeichnet, der 30 Sekunden, bezogen auf einen Startzeitpunkt, bei dem es sich um den aktuellen Zeitpunkt handelt, in der Zukunft liegt. Ein Betreiber des Sicherheitssystemverbunds 1 kann diese Vorschau 19 nutzen, um sich zukünftige Gefährdungssituationen anschaulich anzeigen zu lassen. In diesem Ausführungsbeispiel ist der Zeitpunkt, bzw. das Delta zwischen dem Startzeitpunkt und dem Zeitpunkt, der durch die Vorschau 19 dargestellt werden soll, auswählbar. In diesem Fall ist ein Mauszeiger 20 sichtbar, durch den der Zeitpunkt, in diesem Fall +30 s auswählbar ist. Die Vorschau 19 ist vorzugsweise als Video ausgeführt und zeigt die fortlaufend aktualisierten Positionen von Personen 4 und Maschinen 5 für den zukünftigen Zeitpunkt von +30 s an. Die zentrale Steuereinrichtung 14 ist vorzugsweise dazu ausgebildet, um fortlaufend die Genauigkeit der Vorschau 19 anhand der zukünftig eingehenden Sensordaten 10 zu überprüfen. Abweichungen in der angezeigten Vorschau 19 und der späteren Realität können insbesondere durch das Optimierungsmodul 15 bzw. die KI-Einheit 18 des Optimierungsmoduls 15 für eine aktualisierte Vorschau 19 korrigiert werden.

Es ist auch denkbar, dass eine durch die zentrale Steuereinrichtung 14 oder durch das Optimierungsmodul 15 erzeugte Vorschau 19, die eine bestimmte Zeitdauer umfasst, auf einem festen Startzeitpunkt basiert. Beispielsweise kann der feste Startzeitpunkt in der Vergangenheit die Position der Personen 4 und Maschinen 5 um 9:00 Uhr angeben und die bestimmte, insbesondere durch einen Benutzer vorgebbare Zeitdauer soll 5 Minuten betragen. In diesem Fall wird ausgehend von den bis 9 Uhr vorliegenden Eigenschaften 22 für die Personen 4 und Eigenschaften 23 für die Maschinen 5, die bezogen auf den festen Startzeitpunkt zukünftigen Positionen der Personen 4 und Maschinen 5 berechnet und für den Benutzer visualisiert.

Es ist auch möglich, dass die vorgebare Zeitdauer eine Vielzahl von Zeitpunkten umfasst, wobei für jeden Zeitpunkt die Position der Personen 4 und Maschinen 5 berechnet wird. Ein Abstand zwischen den Zeitpunkten kann gleich groß oder unterschiedlich sein. So kann ein zeitlicher Abstand zwischen bevorzugt zwei Zeitpunkten innerhalb der Zeitdauer größer gewählt werden, wenn der Sicherheitslevel 16 der Personen 4 über einem Schwellwert liegt. Der zeitliche Abstand zwischen bevorzugt zwei Zeitpunkten innerhalb der Zeitdauer kann dagegen kleiner gewählt sein, wenn der Sicherheitslevel 16 der Personen 4 unterhalb eines Schwellwerts liegt. In diesem Fall können gefährliche Situationen feiner aufgelöst werden. Der zeitliche Abstand zwischen den Zeitpunkten hängt dabei von dem berechneten Sicherheitslevel 16 der Person 4 ab und ist damit variabel.

Die Figuren 4A und 4B zeigen die Wirkungsweise des Optimierungsmodul 15, um eine Route eine Maschine 5 zu ändern, damit der Sicherheitslevel 16 einer Person 4 optimiert wird bzw. insbesondere nicht unter einen Schwellwerte fällt. In Figur 4A fährt eine Maschine 5 in Form eines autonom fahrenden Fahrzeugs auf eine Person 4 zu. Daraufhin reduziert sich der Sicherheitslevel 16 in diesem Fall auf den Wert fünf. Die Leistung 21 (zum Beispiel Produktdurchsatz) der Maschine 5 beträgt in diesem Fall 7. Das Optimierungsmodul 15 erzeugt nun eine elektronische Nachricht 17 und überträgt diese der Maschine 5. Durch die elektronische Nachricht 17 wird die Maschine 5 aufgefordert seine geplante Route zu ändern. Dies ist durch den Bewegungspfeil dargestellt. In Figur 4B erhöht sich nun der Sicherheitslevel 16 der Person 4 daraufhin auf den Wert sieben. Dagegen sinkt die Leistung 21 der Maschine 5 auf den Wert fünf ab. Dargestellt sind ebenfalls noch verschiedene Eigenschaften 22 der Person 4 und verschiedene Eigenschaften 23 der Maschine 5. Wie erläutert können diese Eigenschaften 22 bzw. 23 aus den Sensordaten 10 und/oder direkt von der Maschine 5 und/oder über eine Speichereinheit erzeugt bzw. bezogen werden.

Die Figuren 5A und 5B zeigen die Wirkungsweise des Optimierungsmodul 15, um eine Route einer Person 4 zu ändern, damit der Sicherheitslevel 16 einer Person 4 optimiert wird bzw. insbesondere nicht unter einen Schwellwerte fällt und damit die Leistung 21 der Maschine 5 nicht unter einen Schwellwert fällt bzw. über einem Schwellwert liegt. In Figur 5A fährt eine Maschine 5 in Form eines autonom fahrenden Fahrzeugs auf eine Person 4 zu. Daraufhin reduziert sich der Sicherheitslevel 16 in diesem Fall auf den Wert fünf. Die Leistung 21 (zum Beispiel Produktdurchsatz) der Maschine 5 beträgt in diesem Fall 7. Diese Leistung 21 soll beibehalten werden. Das Optimierungsmodul 15 erzeugt nun eine elektronische Nachricht 17 und überträgt diese an die Person 4. Durch die elektronische Nachricht 17 wird die Person 4 aufgefordert seine geplante Route zu ändern. Dies ist durch den Bewegungspfeil dargestellt. In Figur 5B erhöht sich nun der Sicherheitslevel 16 der Person 4 auf den Wert sechs. Weiterhin bleibt die Leistung 21 der Maschine 5 auf den Wert auf dem Wert sieben und wird nicht reduziert.

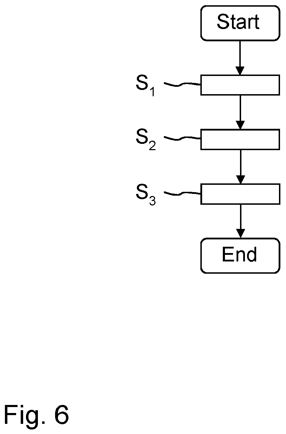

Figur 6 zeigt ein Verfahren zum Betrieb des Sicherheitssystemverbunds 1. In einem ersten Verfahrensschritt $S_1$ werden Sensordaten 10 von einer Vielzahl von Überwachungseinheiten 9 empfangen, wobei in den Sensordaten 10 die im überwachten Bereich 2 von den Überwachungseinheiten 9 erfassten Objekte 3 in Form von Personen 4 und Maschinen 5 enthalten sind. In einem zweiten Verfahrensschritt $S_2$ werden Sicherheitslevel 16 für die Personen 4 anhand der Sensordaten 10 berechnet, die die Gefährdungslage der Personen 4 in dem zu überwachten Bereich 2 angeben. In einem drittem Verfahrensschritt $S_3$ wird die Leistung 21 der Maschinen 5 und der Sicherheitslevels 16 der Personen 4 optimiert.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

Bezugszeichenliste

| | |
|---|---|
| Sicherheitssystemverbund | 1 |
| Bereich | 2 |
| Objekte | 3 |
| Personen | 4 |
| Maschinen | 5 |
| Autonom fahrendes Fahrzeug | 5a |
| Roboter | 5b |
| Förderband | 5c |
| Wand | 6 |
| Palette | 7 |
| Produkte | 8 |
| Überwachungseinheit | 9 |

(fortgesetzt)

| | |
|---|---|
| Sensordaten | 10 |
| Sicherheitszuhaltung | 11 |
| Schiebetüranlage | 12 |
| Gefahrenbereich | 13 |
| Zentrale Steuereinrichtung | 14 |
| Optimierungsmodul | 15 |
| Sicherheitslevel | 16 |
| Elektronische Nachricht | 17 |
| KI-Einheit | 18 |
| Vorschau | 19 |
| Mauszeiger | 20 |
| Leistung | 21 |
| Eigenschaften der Person | 22 |
| Eigenschaften der Maschine | 23 |
| Verfahrensschritte | $S_1, S_2, S_3$ |

**Patentansprüche**

1. Ein Sicherheitssystemverbund (1) zur Überwachung eines Bereichs (2), wie beispielsweise einer Lagerhalle oder Fabrik, in welchem sich Objekte (3) in Form von Personen (4) und Maschinen (5) gemeinsam bewegen, wobei die Maschinen (5) Produkte (8) verarbeiten und/oder herstellen und/oder transportieren,

   wobei der Sicherheitssystemverbund (1) eine zentrale Steuereinrichtung (14) umfasst, die dazu ausgebildet ist, um von einer Vielzahl von Überwachungseinheiten (9) Sensordaten (10) zu empfangen, in denen die im zu überwachenden Bereich (2) von den Überwachungseinheiten (9) erfassten Objekte (3) enthalten sind,
   wobei die zentrale Steuereinrichtung (14) dazu ausgebildet ist, um für die Personen (4) anhand der Sensordaten (10) einen Sicherheitslevel (16) zu berechnen, der die Gefährdungslage der Personen (4) in dem zu überwachten Bereich (2) angibt,
   wobei die zentrale Steuereinrichtung (14) ein Optimierungsmodul (15) umfasst, wobei das Optimierungsmodul (15) dazu ausgebildet ist, um einerseits die Leistung (21) Maschinen (5) zu optimieren und um andererseits den Sicherheitslevel (16) der Personen (4) zu optimieren.

2. Sicherheitssystemverbund (1) nach Anspruch 1,

   wobei die zentrale Steuereinrichtung (14) dazu ausgebildet ist, um anhand der Sensordaten (10) die Eigenschaften (22) der Personen (4) und/oder die Eigenschaften (23) der Maschinen (5) zu ermitteln; und/oder
   wobei die zentrale Steuereinrichtung (14) dazu ausgebildet ist, um Eigenschaften (23) von einer, einigen oder allen Maschinen (5) von dieser Maschine (5) oder diesen Maschinen (5) zu empfangen; und/oder
   wobei die zentrale Steuereinrichtung (14) dazu ausgebildet ist, um Eigenschaften (22) der Personen (4) und/oder Eigenschaften (23) der Maschinen (5) aus zumindest einer Speichereinheit zu laden.

3. Sicherheitssystemverbund (1) nach Anspruch 2,
   wobei es sich bei den Eigenschaften (22) der Personen (4) um zumindest eine der nachfolgenden Informationen handelt:

   - Position der Person (4);
   - geplante Route, die die Person (4) geht;
   - geplanter Bewegungsablauf der Person (4);
   - Zuverlässigkeit der Person (4);
   - Herzfrequenzvariabilität der Person (4);
   - Hautleitfähigkeit der Person (4);
   - Elektrodermale Aktivität der Person (4);
   - Muskelaktivität der Person (4);
   - Körperkerntemperatur der Person (4).

**4.** Sicherheitssystemverbund (1) nach einem der Ansprüche 2 oder 3,
wobei es sich bei den Eigenschaften (23) der Maschinen (5) um zumindest eine der nachfolgenden Informationen handelt:

- Position der Maschine (5);
- geplante Route, die die Maschine (5) fährt;
- Geschwindigkeit, die die Maschine (5) fährt;
- geplanter Bewegungsablauf der Maschine (5);
- Temperatur der Maschine (5);
- Lautstärke der Maschine (5);
- Gewicht der Maschine (5);
- Art der Produkte, die die Maschine (5) herstellt;
- Funktion und Aufgabe der Maschine (5);
- Schnittstellen und Kommunikationsprotokolle der Maschine (5);
- Sicherheits- und Wartungsanforderung der Maschine (5).

**5.** Sicherheitssystemverbund (1) nach einem der Ansprüche 2 bis 4,
wobei das Optimierungsmodul (15) eine KI-Einheit (18) umfasst und wobei die KI-Einheit (18) dazu ausgebildet ist, um anhand der Eigenschaften (22) der Personen (4) und anhand der Eigenschaften (23) der Maschine (5), die Leistung (21) der Maschinen (5) und den Sicherheitslevel (16) der Personen (4) zu optimieren.

**6.** Sicherheitssystemverbund (1) nach einem der vorstehenden Ansprüche,

wobei das Optimierungsmodul (15) oder die zentrale Steuereinrichtung (14) dazu ausgebildet ist, um die geplante Route von zumindest einer Maschine (5) solange zu ändern, bis der Sicherheitslevel (16) einer Person (4):

a) die sich in der Nähe dieser Maschine (5) befindet; und/oder
b) der durch die Maschine (5) beeinflusst wird;

über einem Schwellwert liegt, und
wobei das Optimierungsmodul (15) oder die zentrale Steuereinrichtung (14) weiterhin dazu ausgebildet ist, um die zumindest eine Person (4) zu kontaktieren, dass diese ihre Bewegungsrichtung ändert, bevor die Leistung (21) der Maschine (5) unter einen Schwellwert sinkt.

**7.** Sicherheitssystemverbund (1) nach einem der vorstehenden Ansprüche, wobei das Optimierungsmodul (15) oder die zentrale Steuereinrichtung (14) dazu ausgebildet ist, eine elektronische Nachricht (17) zu erzeugen und diese an eine Maschine (5) zu übertragen, sodass:

a) diese Maschine (5), in Form eines autonom fahrenden Fahrzeugs, seine Route ändert, damit der Sicherheitslevel (16) von zumindest einer Person (4) über einem bestimmten Schwellwert liegt; und/oder
b) diese Maschine (5), in Form eines Roboters, seinen Bewegungsablauf ändert, damit der Sicherheitslevel (16) von zumindest einer Person (4) über einem bestimmten Schwellwert liegt.

**8.** Sicherheitssystemverbund (1) nach einem der vorstehenden Ansprüche, wobei das Optimierungsmodul (15) oder die zentrale Steuereinrichtung (14) dazu ausgebildet ist, eine elektronische Nachricht (17) zu erzeugen und diese an die zumindest eine Person (4) zu übertragen, dass diese zumindest eine Person (4) ihre Bewegungsrichtung ändert, damit der Sicherheitslevel (16) dieser zumindest einen Person (4) über einem bestimmten Schwellwert liegt und der Durchsatz zumindest einer Maschine (5) über einem bestimmten Schwellwert liegt.

**9.** Sicherheitssystemverbund (1) nach Anspruch 8,
wobei das Optimierungsmodul (15) oder die zentrale Steuereinrichtung (14) dazu ausgebildet ist, um Gefahrenquellen, wie beispielsweise hohe Temperaturen oder Lärm, der zumindest einen Person (4) über eine elektronische Nachricht (17) mitzuteilen.

**10.** Sicherheitssystemverbund (1) nach einem der vorstehenden Ansprüche, wobei das Optimierungsmodul (15) dazu ausgebildet ist, um bei Optimierung der Leistung (21) der Maschinen (5) Abhängigkeiten von Maschinen (5) untereinander mit zu berücksichtigen.

11. Sicherheitssystemverbund (1) nach einem der vorstehenden Ansprüche, wobei das Optimierungsmodul (15) oder die zentrale Steuereinrichtung (14) dazu ausgebildet ist, um die Position der Personen (4) und der Maschinen (5) in eine Karte für den Bereich (2) einzuzeichnen.

12. Sicherheitssystemverbund (1) nach Anspruch 11,
wobei das Optimierungsmodul (15) dazu ausgebildet ist, die Position der Personen (4) und der Maschinen (5) für verschiedene Zeitpunkte in der Zukunft bezogen auf einen Startzeitpunkt zu ermitteln, wobei das Optimierungsmodul (15) oder die zentrale Steuereinrichtung (14) dazu bevorzugt ausgebildet ist, um diese Positionen in die Karte einzuzeichnen und als Vorschau (19) für einen Benutzer zu visualisieren.

13. Sicherheitssystemverbund (1) nach Anspruch 12,
wobei der Startzeitpunkt fest ist und wobei das Optimierungsmodul (15) oder die zentrale Steuereinrichtung (14) dazu ausgebildet ist, um diese Positionen ausgehendend von dem festen Startzeitpunkt in der Vergangenheit für eine bestimmte Zeitdauer für die Zukunft zu berechnen und in Form der Vorschau für den Benutzer zu visualisieren.

14. Sicherheitssystemverbund (1) nach Anspruch 12,
wobei der Startzeitpunkt der jeweils aktuelle Zeitpunkt ist und wobei das Optimierungsmodul (15) oder die zentrale Steuereinrichtung (14) dazu ausgebildet ist, um diese Positionen, ausgehendend von einem jeweils aktuellen Zeitpunkt für einen bestimmten, um eine bestimmte Zeit vom jeweils aktuellen Zeitpunkt in die Zukunft beabstandeten zukünftigen Zeitpunkt zu berechnen und in Form der Vorschau für den Benutzer zu visualisieren.

15. Verfahren zum Betrieb des Sicherheitssystemverbunds (1), der nach einem der vorherigen Ansprüche aufgebaut ist, mit den folgenden Verfahrensschritten:

- Empfangen ($S_1$) von Sensordaten (10) von einer Vielzahl von Überwachungseinheiten (9), in denen die im überwachten Bereich (2) von den Überwachungseinheiten (9) erfassten Objekte (3) in Form von Personen (4) und Maschinen (5) enthalten sind,
- Berechnen ($S_2$) von Sicherheitslevel (16) für die Personen (4) anhand der Sensordaten (10), die die Gefährdungslage der Personen (4) in dem zu überwachenden Bereich (2) angeben,
- Optimieren ($S_3$) der Leistung (21) der Maschinen (5) und Optimieren der Sicherheitslevel (16) der Personen (4).

**Geänderte Patentansprüche gemäss Regel 137(2) EPÜ.**

1. Ein Sicherheitssystemverbund (1) zur Überwachung eines Bereichs (2), wie beispielsweise einer Lagerhalle oder Fabrik, in welchem sich Objekte (3) in Form von Personen (4) und Maschinen (5) gemeinsam bewegen, wobei die Maschinen (5) Produkte (8) verarbeiten und/oder herstellen und/oder transportieren,

wobei der Sicherheitssystemverbund (1) eine zentrale Steuereinrichtung (14) umfasst, die dazu ausgebildet ist, um von einer Vielzahl von Überwachungseinheiten (9) Sensordaten (10) zu empfangen, in denen die im zu überwachenden Bereich (2) von den Überwachungseinheiten (9) erfassten Objekte (3) enthalten sind,
wobei die zentrale Steuereinrichtung (14) dazu ausgebildet ist, um für die Personen (4) anhand der Sensordaten (10) einen Sicherheitslevel (16) zu berechnen, der die Gefährdungslage der Personen (4) in dem zu überwachten Bereich (2) angibt,
wobei die zentrale Steuereinrichtung (14) ein Optimierungsmodul (15) umfasst, wobei das Optimierungsmodul (15) dazu ausgebildet ist, um einerseits die Leistung (21) der Maschinen (5) zu optimieren und um andererseits den Sicherheitslevel (16) der Personen (4) zu optimieren,
**dadurch gekennzeichnet,**
**dass** das Optimierungsmodul (15) dazu ausgebildet ist, um bei Optimierung der Leistung (21) der Maschinen (5) Abhängigkeiten von Maschinen (5) untereinander mit zu berücksichtigen.

2. Sicherheitssystemverbund (1) nach Anspruch 1,

wobei die zentrale Steuereinrichtung (14) dazu ausgebildet ist, um anhand der Sensordaten (10) die Eigenschaften (22) der Personen (4) und/oder die Eigenschaften (23) der Maschinen (5) zu ermitteln; und/oder
wobei die zentrale Steuereinrichtung (14) dazu ausgebildet ist, um Eigenschaften (23) von einer, einigen oder allen Maschinen (5) von dieser Maschine (5) oder diesen Maschinen (5) zu empfangen; und/oder
wobei die zentrale Steuereinrichtung (14) dazu ausgebildet ist, um Eigenschaften (22) der Personen (4) und/oder Eigenschaften (23) der Maschinen (5) aus zumindest einer Speichereinheit zu laden.

3. Sicherheitssystemverbund (1) nach Anspruch 2,
wobei es sich bei den Eigenschaften (22) der Personen (4) um zumindest eine der nachfolgenden Informationen handelt:

- Position der Person (4);
- geplante Route, die die Person (4) geht;
- geplanter Bewegungsablauf der Person (4);
- Zuverlässigkeit der Person (4);
- Herzfrequenzvariabilität der Person (4);
- Hautleitfähigkeit der Person (4);
- Elektrodermale Aktivität der Person (4);
- Muskelaktivität der Person (4);
- Körperkerntemperatur der Person (4).

4. Sicherheitssystemverbund (1) nach einem der Ansprüche 2 oder 3,
wobei es sich bei den Eigenschaften (23) der Maschinen (5) um zumindest eine der nachfolgenden Informationen handelt:

- Position der Maschine (5);
- geplante Route, die die Maschine (5) fährt;
- Geschwindigkeit, die die Maschine (5) fährt;
- geplanter Bewegungsablauf der Maschine (5);
- Temperatur der Maschine (5);
- Lautstärke der Maschine (5);
- Gewicht der Maschine (5);
- Art der Produkte, die die Maschine (5) herstellt;
- Funktion und Aufgabe der Maschine (5);
- Schnittstellen und Kommunikationsprotokolle der Maschine (5);
- Sicherheits- und Wartungsanforderung der Maschine (5).

5. Sicherheitssystemverbund (1) nach einem der Ansprüche 2 bis 4, wobei das Optimierungsmodul (15) eine KI-Einheit (18) umfasst und wobei die KI-Einheit (18) dazu ausgebildet ist, um anhand der Eigenschaften (22) der Personen (4) und anhand der Eigenschaften (23) der Maschine (5), die Leistung (21) der Maschinen (5) und den Sicherheitslevel (16) der Personen (4) zu optimieren.

6. Sicherheitssystemverbund (1) nach einem der vorstehenden Ansprüche, wobei das Optimierungsmodul (15) oder die zentrale Steuereinrichtung (14) dazu ausgebildet ist, um die geplante Route von zumindest einer Maschine (5) solange zu ändern, bis der Sicherheitslevel (16) einer Person (4):

a) die sich in der Nähe dieser Maschine (5) befindet; und/oder
b) der durch die Maschine (5) beeinflusst wird;
über einem Schwellwert liegt, und
wobei das Optimierungsmodul (15) oder die zentrale Steuereinrichtung (14) weiterhin dazu ausgebildet ist, um die zumindest eine Person (4) zu kontaktieren, dass diese ihre Bewegungsrichtung ändert, bevor die Leistung (21) der Maschine (5) unter einen Schwellwert sinkt.

7. Sicherheitssystemverbund (1) nach einem der vorstehenden Ansprüche, wobei das Optimierungsmodul (15) oder die zentrale Steuereinrichtung (14) dazu ausgebildet ist, eine elektronische Nachricht (17) zu erzeugen und diese an eine Maschine (5) zu übertragen, sodass:

a) diese Maschine (5), in Form eines autonom fahrenden Fahrzeugs, seine Route ändert, damit der Sicherheitslevel (16) von zumindest einer Person (4) über einem bestimmten Schwellwert liegt; und/oder
b) diese Maschine (5), in Form eines Roboters, seinen Bewegungsablauf ändert, damit der Sicherheitslevel (16) von zumindest einer Person (4) über einem bestimmten Schwellwert liegt.

8. Sicherheitssystemverbund (1) nach einem der vorstehenden Ansprüche, wobei das Optimierungsmodul (15) oder die zentrale Steuereinrichtung (14) dazu ausgebildet ist, eine elektronische Nachricht (17) zu erzeugen und diese an die zumindest eine Person (4) zu übertragen, dass diese zumindest eine Person (4) ihre Bewegungsrichtung ändert, damit der Sicherheitslevel (16) dieser zumindest einen Person (4) über einem bestimmten Schwellwert liegt und der Durchsatz zumindest einer Maschine (5) über einem bestimmten Schwellwert liegt.

9. Sicherheitssystemverbund (1) nach Anspruch 8,
   wobei das Optimierungsmodul (15) oder die zentrale Steuereinrichtung (14) dazu ausgebildet ist, um Gefahrenquellen, wie beispielsweise hohe Temperaturen oder Lärm, der zumindest einen Person (4) über eine elektronische Nachricht (17) mitzuteilen.

10. Sicherheitssystemverbund (1) nach einem der vorstehenden Ansprüche, wobei das Optimierungsmodul (15) oder die zentrale Steuereinrichtung (14) dazu ausgebildet ist, um die Position der Personen (4) und der Maschinen (5) in eine Karte für den Bereich (2) einzuzeichnen.

11. Sicherheitssystemverbund (1) nach Anspruch 10,
    wobei das Optimierungsmodul (15) dazu ausgebildet ist, die Position der Personen (4) und der Maschinen (5) für verschiedene Zeitpunkte in der Zukunft bezogen auf einen Startzeitpunkt zu ermitteln, wobei das Optimierungsmodul (15) oder die zentrale Steuereinrichtung (14) dazu bevorzugt ausgebildet ist, um diese Positionen in die Karte einzuzeichnen und als Vorschau (19) für einen Benutzer zu visualisieren.

12. Sicherheitssystemverbund (1) nach Anspruch 11,
    wobei der Startzeitpunkt fest ist und wobei das Optimierungsmodul (15) oder die zentrale Steuereinrichtung (14) dazu ausgebildet ist, um diese Positionen ausgehendend von dem festen Startzeitpunkt in der Vergangenheit für eine bestimmte Zeitdauer für die Zukunft zu berechnen und in Form der Vorschau für den Benutzer zu visualisieren.

13. Sicherheitssystemverbund (1) nach Anspruch 11,
    wobei der Startzeitpunkt der jeweils aktuelle Zeitpunkt ist und wobei das Optimierungsmodul (15) oder die zentrale Steuereinrichtung (14) dazu ausgebildet ist, um diese Positionen, ausgehendend von einem jeweils aktuellen Zeitpunkt für einen bestimmten, um eine bestimmte Zeit vom jeweils aktuellen Zeitpunkt in die Zukunft beabstandeten zukünftigen Zeitpunkt zu berechnen und in Form der Vorschau für den Benutzer zu visualisieren.

14. Verfahren zum Betrieb des Sicherheitssystemverbunds (1), der nach einem der vorherigen Ansprüche aufgebaut ist, mit den folgenden Verfahrensschritten:

    - Empfangen ($S_1$) von Sensordaten (10) von einer Vielzahl von Überwachungseinheiten (9), in denen die im überwachten Bereich (2) von den Überwachungseinheiten (9) erfassten Objekte (3) in Form von Personen (4) und Maschinen (5) enthalten sind,
    - Berechnen ($S_2$) von Sicherheitslevel (16) für die Personen (4) anhand der Sensordaten (10), die die Gefährdungslage der Personen (4) in dem zu überwachenden Bereich (2) angeben,
    - Optimieren ($S_3$) der Leistung (21) der Maschinen (5) und Optimieren der Sicherheitslevel (16) der Personen (4), wobei bei Optimierung der Leistung (21) der Maschinen (5) Abhängigkeiten von Maschinen (5) untereinander berücksichtigt werden.

Fig. 1

Fig. 2

Fig. 3

Fig. 4B

Fig. 4A

EP 4 650 119 A1

Fig. 5A

Fig. 5B

Fig. 6

EUROPÄISCHER RECHERCHENBERICHT

Nummer der Anmeldung

EP 24 17 6599

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/105634 A1 (OBORIL FABIAN [DE] ET AL) 7. April 2022 (2022-04-07) <br> * Absatz [0001] * <br> * Absatz [0024] - Absatz [0072] * <br> * Abbildungen 4,8 * <br> ----- | 1-15 | INV. <br> B25J9/16 <br><br> ADD. <br> G05B19/4061 <br> G05D1/00 |
| X | US 10 233 021 B1 (BRADY TYE MICHAEL [US] ET AL) 19. März 2019 (2019-03-19) <br> * Spalte 2, Zeile 6 - Spalte 11, Zeile 31 * <br> ----- | 1,15 | |
| X | US 2019/047143 A1 (MATSUDAIRA TETSURO [JP] ET AL) 14. Februar 2019 (2019-02-14) <br> * Absatz [0004] - Absatz [0049] * <br> ----- | 1,15 | |
| X | US 2023/202037 A1 (ANDREONI GILDO [IT] ET AL) 29. Juni 2023 (2023-06-29) <br> * Absatz [0018] - Absatz [0051] * <br> ----- | 1,15 | |
| A | Zhang Dianhao: "Enhanced human-robot collaboration through deep learning enabled human motion prediction", <br> , <br> 1. Januar 2023 (2023-01-01), XP093221836, <br> Gefunden im Internet: <br> URL:https://pure.qub.ac.uk/files/447682594 /PhD_thesis_Dianhao_final.pdf <br> * das ganze Dokument * <br> ----- | 1-15 | RECHERCHIERTE SACHGEBIETE (IPC) <br><br> B25J <br> G05B <br> G05D |
| A | US 2019/105788 A1 (PILZ THOMAS [DE] ET AL) 11. April 2019 (2019-04-11) <br> * das ganze Dokument * <br> ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 7. November 2024 | De Santis, Agostino |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 6599

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2024

| Im Recherchenbericht angeführtes Patentdokument | Datum der Veröffentlichung | Mitglied(er) der Patentfamilie | Datum der Veröffentlichung |
|---|---|---|---|
| US 2022105634 A1 | 07-04-2022 | EP 4197710 A1<br>US 2022105634 A1 | 21-06-2023<br>07-04-2022 |
| US 10233021 B1 | 19-03-2019 | KEINE | |
| US 2019047143 A1 | 14-02-2019 | CN 109382825 A<br>DE 102018006248 A1<br>JP 6680730 B2<br>JP 2019030941 A<br>US 2019047143 A1 | 26-02-2019<br>14-02-2019<br>15-04-2020<br>28-02-2019<br>14-02-2019 |
| US 2023202037 A1 | 29-06-2023 | EP 4205914 A1<br>US 2023202037 A1 | 05-07-2023<br>29-06-2023 |
| US 2019105788 A1 | 11-04-2019 | CN 109634269 A<br>DE 102017123295 A1<br>EP 3467601 A2<br>EP 4316756 A2<br>JP 7393857 B2<br>JP 2019069509 A<br>US 2019105788 A1 | 16-04-2019<br>11-04-2019<br>10-04-2019<br>07-02-2024<br>07-12-2023<br>09-05-2019<br>11-04-2019 |

EPO FORM P0461

Für nähere Einzelheiten zu diesem Anhang : siehe Amtsblatt des Europäischen Patentamts, Nr.12/82